(19)

Europäisches Patentamt
European Patent Office
Office européen des brevets

(11) **EP 3 855 669 A1**

(12) **EUROPEAN PATENT APPLICATION**

(43) Date of publication:
**28.07.2021 Bulletin 2021/30**

(51) Int Cl.:
**H04L 5/00** *(2006.01)*    **H04B 7/06** *(2006.01)*
**H04B 7/08** *(2006.01)*

(21) Application number: **20153938.4**

(22) Date of filing: **27.01.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Fraunhofer Gesellschaft zur Förderung der angewandten Forschung e.V.**
**80686 München (DE)**

(72) Inventors:
• **Varatharaajan, Sutharshun**
  **91058 Erlangen (DE)**
• **Grossmann, Marcus**
  **91058 ERLANGEN (DE)**
• **Landmann, Markus**
  **91058 ERLANGEN (DE)**

(74) Representative: **Groth & Co. KB**
**P.O. Box 6107**
**102 32 Stockholm (SE)**

(54) **METHODS AND APPARATUSES FOR SOUNDING REFERENCE SIGNAL CONFIGURATION AND TRIGGERING IN A WIRELESS COMMUNICATIONS NETWORK**

(57)    The embodiment of the present disclosure relates to methods and apparatuses for sounding reference signal configuration and triggering in wireless communications network such as advanced 5G networks. A method performed by a user equipment (1300) comprising: receiving (901) a higher layer configuration that associates SRS resource, with a control resource set pool index which is a higher-layer parameter in a configuration of CORESET comprising resources on which a PDCCH is transmitted from a network node (1400) and deriving (902) a spatial relation or a reference signal as pathloss reference for said SRS resource with reference to at least one reference signal from quasi-colocation (QCL) information of a CORESET associated with the control resource set pool index; wherein the QCL information comprises a relationship between one or more reference signals and DMRS port(s) of the PDCCH transmitted on the CORESET and the relationship indicates parameter(s) that are obtained from the reference signals.

901 — Receiving a higher layer configuration that associates a SRS, resource or an SRS resource set comprising at least one SRS resource, with a *CORESETpoolIndex* which is a higher-layer parameter in a CORESET comprising resources on which a PDCCH is transmitted

902 — Deriving a spatial relation or a RS as pathloss reference for said SRS resource or for said at least one SRS resource of the SRS resource set with reference to at least RS, from QCL information of a CORESET; wherein the QCL information comprises a relationship between one or more reference signals and DMRS port(s) of the PDCCH transmitted on the CORESET and the relationship indicates channel parameter(s) or reception type parameter(s) that are obtained from the reference signals

Figure 9

EP 3 855 669 A1

**Description**

**TECHNICAL FIELD**

The present disclosure relates to the field of wireless communications, and in particular to methods and apparatuses for sounding reference signal (SRS) configuration and beam management of the SRS in a wireless communications network such as 5G.

**BACKGROUND**

In millimeter wave (mmWave) frequencies (frequency range 2 (FR2)), i.e., frequencies above 6 GHz, in general, wireless communication between communication devices is performed with spatially selective/directive transmissions and receptions called beams. Therefore, beam management is a required framework for link establishment, adaptation and recovery at FR2.

In the Third Generation Partnership Project Release 16, (3GPP Rel. 16), beam management in uplink (UL) is handled separately for various UL channels and UL reference signals. The functionalities of the UL beam management framework are spread over three communication layers -the physical (PHY) layer [1-4], the medium access control (MAC) layer [5] and the Radio Resource Control (RRC) layer [6]. In order to enable a beamformed uplink transmission between a User Equipment (UE) and a radio network node (gNB), the beam management performs two tasks: Indication of the beam direction for the UL transmission, and indication of the transmit power settings associated with it. The two tasks are handled in different ways for the physical uplink shared channel (PUSCH), the physical uplink control channel (PUCCH) and the sounding reference signal (SRS).

On the other hand, in the downlink (DL), the UE must be given directives to derive various parameters such as delay spread, average delay, Doppler and Rx beam direction for the reception of a DL channel or reference signal (RS).

The term 'beam' is used in the following to denote a spatially selective/directive transmission of an outgoing signal or reception of an incoming signal which is achieved by precoding/filtering the signal at the antenna ports of the device with a particular set of coefficients. The words precoding or filtering may refer to processing of the signal in the analog or digital domain. The set of coefficients used to spatially direct a transmission/reception in a certain direction may differ from one direction to another direction. The term 'Tx beam' denotes a spatially selective/directive transmission and the term 'Rx beam' denotes a spatially selective/directive reception. The set of coefficients used to precode/filter the transmission or reception is denoted by the term 'spatial filter'. The term 'spatial filter' is used interchangeably with the term 'beam direction' in this document as the spatial filter coefficients determine the direction in which a transmission/reception is spatially directed to.

In case of the UE, the 'spatial relation' for an UL channel 'Uc' or RS 'Ur' with respect to or with reference to a DL or UL RS 'R' means that the UE uses the spatial filter used to receive or transmit the RS 'R' to transmit the UL channel 'Uc' or RS 'Ur', or it means that the UE uses the spatial filter used to receive or transmit the RS 'R' as a reference to determine the spatial filter used to transmit the UL channel 'Uc' or RS 'Ur'.

The term 'higher layer' in the following, when used in isolation, denotes any communication layer above the physical layer in the protocol stack.

The term serving cell and carrier component (CC) may be used interchangeably in this disclosure as a serving cell configured for a UE and is usually a separate physical carrier centered around a particular carrier frequency. Depending on the frequency of a component carrier/serving cell, the size of the cell and the beamformed reference signals may vary.

In the following, the state of the art (SoTA) for UL and DL beam management and pathloss reference signals is discussed. The discussions are centered around the beam management of SRS. This is followed by the discussion in the SoTA with respect to SRS beam management for multi-TRP (Transmit-Receive Point) communications.

DOWNLINK TRANSMISSION CONFIGURATION INDICATION

The physical downlink control channel (PDCCH) and the physical downlink shared channel (PDSCH) carry DL control information and DL data, respectively, to a UE [1-6].

The PDCCH is configured at the Radio Resource Control (RRC) layer level by a base station or a network node or gNodeB (gNB). The gNB transmits the PDCCH(s) on one or more Control Resource Sets (CORESETs) that are configured at RRC level. A CORESET is a set of resource blocks carrying control information. Each CORESET comprises one or more PDCCH(s), each linked to a search space configuration. The UE monitors the configured search spaces to obtain the PDCCH(s). A PDCCH is either part of a common search space (CSS) or a UE-specific Search Space (USS). PDCCHs belonging to the CSS usually contain information that is broadcast by the gNB to all UEs, like system information broadcast or paging information. The PDCCHs belonging to a USS contain UE specific information, such as the Downlink Control Information (DCI) to schedule a PDSCH or PUSCH or SRS trigger, etc.

Demodulation Reference Signals (DMRS) are embedded for the coherent demodulation of the PDCCH/PDSCH at the UE. The DMRS consists of a set of DMRS ports. The number of DMRS ports determines the number of transmission layers contained in a PDSCH. DMRS is used for channel estimation at the UE to coherently demodulate the PDSCH or PDCCH(s). In the case of PDCCH, one or more of them may be transmitted on a CORESET. Therefore, the DMRS for the coherent demodulation of the PDCCH(s) on the CORESET may be embedded across the PDCCH(s) transmitted on the CORESET.

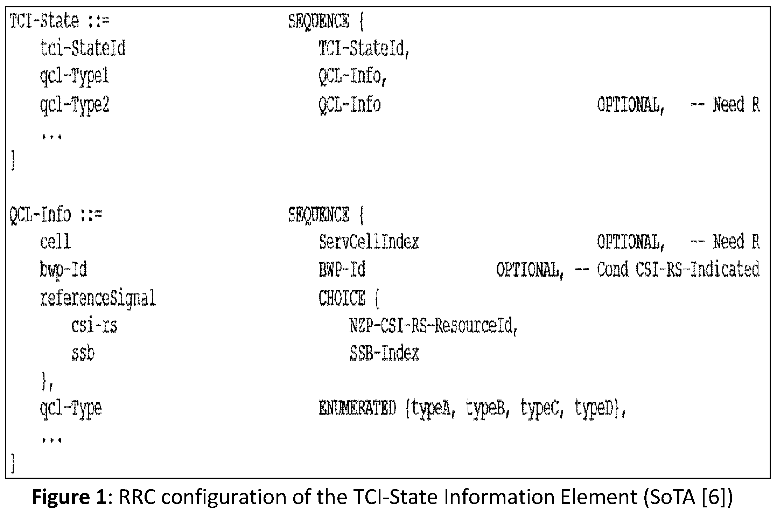

An important parameter in the transmission of the PDCCH and the PDSCH is the 'Transmission Configuration Indication'- state (TCI-state) [4]. In 3GPP Rel. 16, the indication of how the control or the shared channel is transmitted by the gNB and what assumptions the UE must consider while receiving them is done via Reference Signals (RSs). The indication to the UE is performed using a TCI-state Information Element (IE) configured via RRC, as shown in **Figure 1.** A TCI-state IE comprises the following elements:

- One of more reference signal(s), and
- for each reference signal, one or more Quasi-CoLocation (QCL) assumptions.

The TCI-state is used to mention how to receive a PDSCH or the PDCCH(s) transmitted on a CORESET. Applying a TCI-state to a PDSCH or CORESET implies that the DMRS ports of the PDSCH or the DMRS ports of the PDCCH(s), transmitted on the CORESET, shall be assumed to be quasi-colocated (QCL) with the reference signals mentioned in the TCI-state according to the corresponding quasi-colocation assumptions for the reference signal mentioned in the TCI-state.

Assuming 'quasi-colocation' means that certain channel parameters such as Doppler shift/spread, delay spread, average delay and/or Tx beam direction are assumed to be the same for the DL RS mentioned in the TCI-state and the DMRS ports of the PDSCH, or the DMRS ports of the PDCCH(s) transmitted on the CORESET. Four different QCL types can be indicated in 3GPP Rel. 16 [4]:

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}, and
- 'QCL-TypeD': {Spatial Rx parameter}.

As shown above, the QCL information may also include a reception type parameter such as the spatial Rx (Receiver) parameter. One or more of the QCL-Info parameters is/are included in the TCI-state IE to provide the QCL assumption(s) associated with the TCI-state.

For example, a TCI-state IE comprising a DL reference signal 'A' with QCL assumption 'QCL-typeA' and a DL reference signal 'B' with QCL-assumption 'QCL-TypeD' is considered. Applying this TCI-state to a PDSCH or CORESET with the given QCL assumptions means that the UE shall assume the same Doppler shift, Doppler spread, average delay and delay spread for the DMRS ports of the PDSCH or the DMRS ports of the PDCCH(s) transmitted on the CORESET and the DL reference signal A, and the UE shall use the same spatial filter to receive the DL reference signal 'B' and the DMRS ports of the PDSCH or the DMRS ports of the PDCCH(s) transmitted on the CORESET.

Usually, the TCI state that is used to schedule a PDCCH or a PDSCH contains the identifiers (IDs) of Channel State Information Reference Signals (CSI-RS) or Synchronization Signal Blocks (SSB) along with the QCL assumptions for each reference signal. The RS in the TCI-state is usually a RS that the UE has measured before, so that it can use it as a reference to receive the DMRS of the PDCCH or PDSCH, and hence demodulate the same. The indication of a TCI-state for a CORESET or a PDSCH is performed via MAC Control Element (MAC-CE) messages or using the TCI-indication field in the DCI used to schedule the PDSCH.

In FR2, where the gNB and UE establish a connection via spatially selective/directive beams, the TCI-state is used to indicate the beam directions in which the UE must receive, i.e., the spatial filter to be used by the UE to receive a PDSCH/PDCCH(s) via a 'qcl-TypeD' assumption with a CSI-RS or an SSB that the UE has already received. The determination of the DL Tx beam to transmit PDCCH(s)/PDSCH is performed via a beam sweeping procedure. In a beam sweeping procedure, the gNB configures a set of DL RSs (CSI-RS or SSB) for the UE to measure in the DL via the RRC. Each of the configured DL RS may be transmitted with a different spatial filter, i.e., each of the configured DL RS may be transmitted in a different direction by the gNB. The UE measures each of the configured DL RS by receiving them using one or more spatial filters - the RSs may all be received with the same spatial filter or a different spatial filter may be used to receive each RS. Following the measurements, the UE sends a beam report to the gNB. The beam report may comprise the indices of $1 \leq L \leq 4$ configured DL RSs (essentially, $L$ DL Tx beam directions, with each beam direction resulting from the use of a specific spatial filter at the gNB) along with the received power for each of the RSs [4]. Based on the beam report, the gNB determines one or more suitable DL Tx beam direction(s), i.e., spatial filter(s) for the transmission of the PDCCH(s) and the PDSCH.

SOUNDING REFERENCE SIGNAL (SRS)

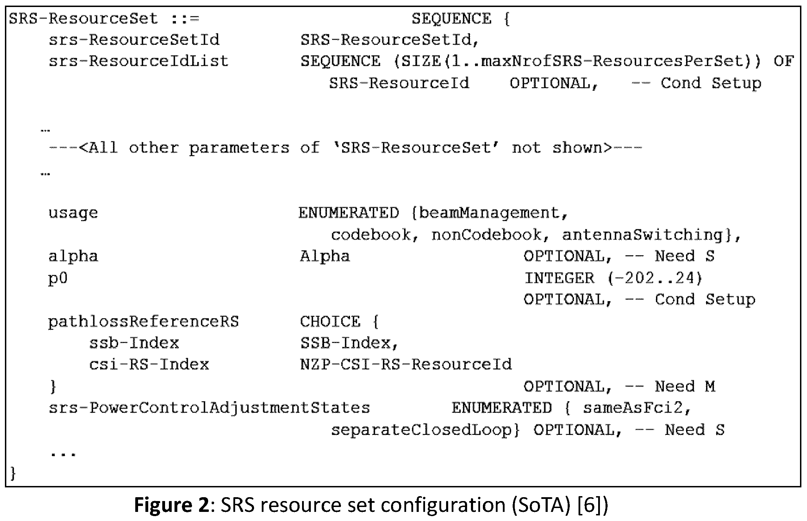

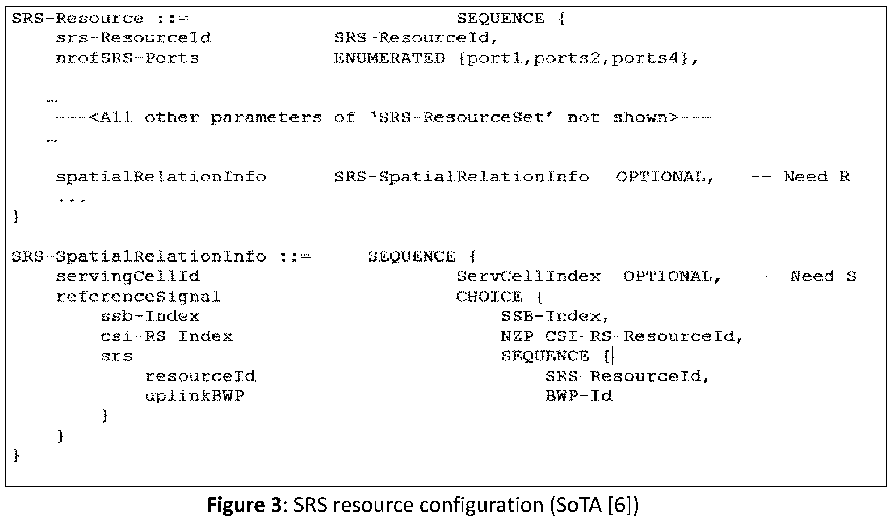

Sounding Reference Signals (SRS), as the name suggests, are used for sounding the UL channel. The basic unit of the SRS is an SRS resource. An SRS resource is a specific pattern of reference symbols in time, frequency and code transmitted by all or a subset of UE's antenna ports in the UL to sound the UL channel. The UE is configured by the gNB via the RRC with one or more SRS resource sets, with each SRS resource set consisting of one or more SRS resources. The RRC information elements (IEs) that configure the SRS resource, SRS resource set and the SRS-SpatialRelationInfo are shown in **Figure 2** and **Figure 3** [6].
As indicated in the SRS configuration provided in Figure 2, the parameter 'usage' indicates the purpose for which the SRS is used:

> 1) Usage = 'codebook': to sound the UL channel before a codebook-based-PUSCH transmission.
> 2) Usage = 'non-codebook': to sound the UL channel before a non-codebook-based-PUSCH transmission.
> 3) Usage = 'beamManagement': to sound the UL channel with beamformed SRS resources to identify suitable UL beams.
> 4) Usage = 'antennaSwitching': to sound the UL channel to obtain DL channel information.

In the case of codebook and non-codebook-based SRS transmissions, the gNB measures the SRS resource(s) and provides digital precoding/port-selection information to the UE for the following PUSCH transmission. In case of 'beamManagement' SRS, the UE beamforms the SRS in various directions for the gNB to determine suitable UL beam(s). The chosen beam(s) are used to indicate the spatial relation, i.e., beam direction for PUCCH and/or PUSCH and/or other SRS resources (the parameter 'spatialRelationInfo' contains the RS used to indicate the RS used as the spatial relation for the SRS resource which may be a Channel State Information Reference Signal - CSI-RS, Synchronization Signal Block - SSB or SRS). The 'antennaSwitching' SRS is used to exploit channel reciprocity and to obtain channel DL information via UL sounding.
The two parameters of SRS that are of interest are the spatialRelationInfo and the pathloss reference RS. The SRS-SpatialRelationInfo IE shown in Figure 3 provides the beam direction that the UE should use for the SRS resource via a CSI-RS or an SSB or an SRS resource. With this signaling, the gNB indicates to the UE that it shall use the spatial filter used for the reception of the SSB or CSI-RS resource or the transmission of the SRS resource provided in the SRS-SpatialRelationInfo IE of an SRS resource to transmit the SRS resource. The indication of the SRS-SpatialRelationInfo is vital in the case of FR2 where beamformed transmissions are required. The pathloss reference RS, which is configured via the RRC or indicated via a MAC, is used in the power control settings of the SRS to determine the PathLoss (PL) estimate for the transmission of the SRS [3].
The transmit power of SRS is obtained by a combination of parameters configured/indicated to the UE as follows: If a UE transmits SRS on active UL bandwidth part $b$ of carrier $f$ of serving cell c using SRS power control adjustment state with index $l$, the UE determines the SRS transmission power $P_{\text{SRS},b,f,c}(i, q_s, l)$ in SRS transmission occasion $i$ for the SRS resource set $q_s$ as:

$$P_{\text{SRS},b,f,c}(i, q_s, l) =$$

$$\min\begin{cases} P_{\text{CMAX},f,c}(i), \\ P_{\text{O\_SRS},b,f,c}(q_s) + 10\,log_{10}(\,2^{\mu} \cdot M_{\text{SRS},b,f,c}(i)) + \alpha_{\text{SRS},b,f,c}(q_s) \cdot PL_{b,f,c}(q_d) + h_{b,f,c}(i,l) \end{cases} \text{[dBm]}$$

where,

- $P_{\text{CMAX},f,c}(i)$ is the configured maximum UE transmit power [7] and [8].
- $P_{\text{O\_SRS},b,f,c}(q_s)$ is provided by the higher layer parameter p0 or the nominal PUSCH Tx power.
- $M_{\text{SRS},b,f,c}(i)$ is a SRS bandwidth expressed in number of resource blocks, which is obtained from the SRS configuration.
- $PL_{b,f,c}(q_d)$ is a downlink pathloss estimate in dB calculated from the DL RS $q_d$ as described in [3] for the SRS resource set $q_s$. The pathloss estimate may be derived from the pathloss reference RS (a CSI-RS or an SSB resource) configured/indicated via a higher layer.
- $\alpha_{\text{SRS},b,f,c}(q_s)$ is a pathloss compensation factor configured by the higher layer parameter Alpha.
- $h_{b,f,c}(i,l)$ is a closed loop power correction function that is dependent on the closed loop power control adjustment state configured in the SRS resource set IE (shown in Figure 2).

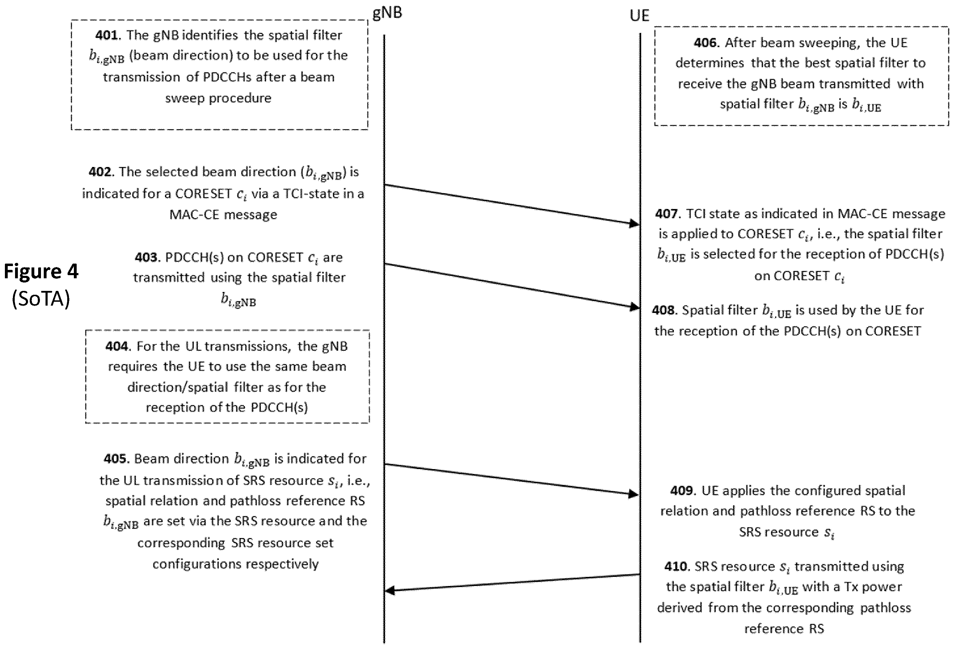

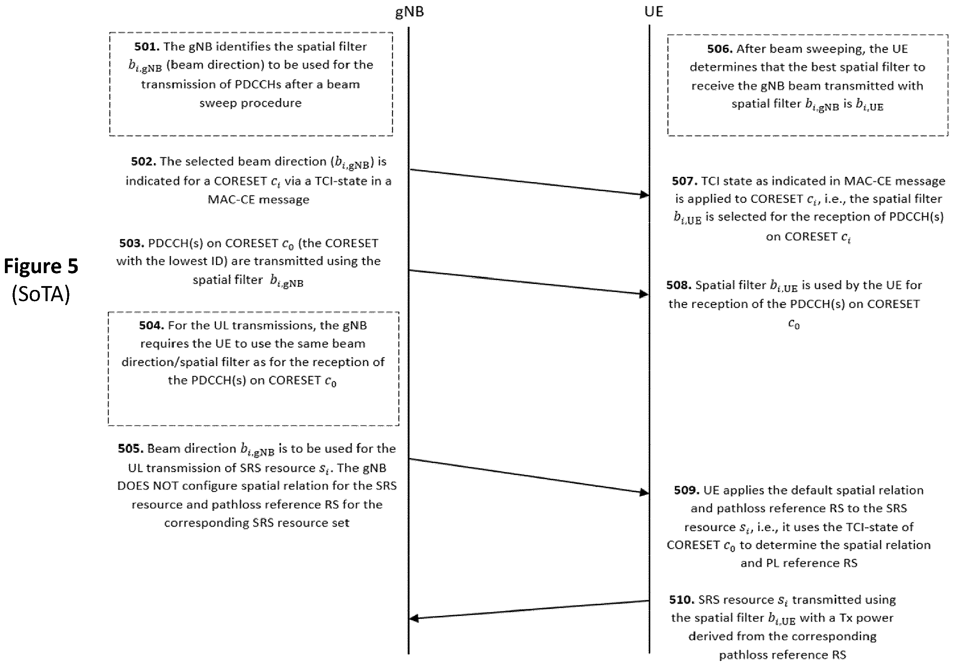

The mechanism used for the determination of a pathloss reference RS and a spatial relation are provided in **Figure 4** and **Figure 5.** Figure 4 illustrates an example scenario of SRS spatial relation and pathloss reference RS configuration in FR2 that may be performed using the SoTA.

In the example scenario of **Figure 4,** the SRS resources are explicitly configured with spatial relations. The pathloss reference RS in FR2 scenarios is, in many times, the same RS that is used in the spatial relation. Therefore, the outcome of the beam sweeping procedure can be used for both spatial relation and pathloss reference RS determination.

As shown in Figure 4:

gNB side

401. The gNB identifies the spatial filter, denoted $b_{i,gNB}$ (beam direction) to be used for the transmission of PDCCHs after a beam sweep procedure.

402. The selected beam direction ($b_{i,gNB}$) is indicated for a CORESET $c_i$ via a TCI-state in a MAC-CE message that is transmitted to the UE.

403. The gNB also transmits PDCCH(s) on CORESET $c_i$ using the spatial filter $b_{i,gNB}$

404. For the UL transmissions, the gNB requires the UE to use the same beam direction/spatial filter as for the reception of the PDCCH(s).

405. The beam direction $b_{i,gNB}$ is indicated for the UL transmission of SRS resource $s_i$, i.e., spatial relation and pathloss reference RS $b_{i,gNB}$ are set in the SRS resource and the corresponding SRS resource set configurations respectively.

UE side

406. After beam sweeping, the UE determines that the best spatial filter to receive the gNB beam transmitted with spatial filter $b_{i,gNB}$ is $b_{i,UE}$.

407. The TCI state as indicated in MAC-CE message received from the gNB is applied to CORESET $c_i$, i.e., the spatial filter $b_{i,UE}$ is selected for the reception of PDCCH(s) on CORESET $c_i$.

408. The Spatial filter $b_{i,UE}$ is used by the UE for the reception of the PDCCH(s) on CORESET $c_i$ transmitted by the gNB.

409. UE applies the configured spatial relation and pathloss reference RS to the SRS resource $s_i$.

410. the SRS resource $s_i$ is transmitted to the gNB using the spatial filter $b_{i,UE}$ with a transmit (Tx) power derived from the corresponding pathloss reference RS.

In 3GPP Rel. 16, default spatial relations and pathloss reference RS assumptions were defined for UL channels and UL RSs. The 3GPP specification provides directives to identify the spatial relation and pathloss reference RS of an UL channel or UL RS in case they are not explicitly configured or indicated. In scenarios where beamformed transmissions are used (common in FR2), pathloss reference and the spatial relation may be derived from a downlink RS. This means the DL RS (e.g., indicated via the TCI state) used as a reference to obtain the beam direction for receiving the DL RS at the UE may be used as a reference to derive the spatial relation for an UL channel or UL RS and used in the calculation of the pathloss estimate for the Tx power calculation of the UL transmission.

Defining default spatial relations and pathloss reference RSs avoids the explicit indication and hence reduces control information overhead and latency. In 3GPP Rel. 16, the default pathloss reference RS and spatial relations for SRS are obtained from the QCL assumptions of a specified CORESET or a PDSCH [3], [4]. The default spatial relation and pathloss reference RS are obtained from the specified CORESET, when CORESETs are configured on the CC and they are obtained from a PDSCH when there are no CORESETs on the CC.

An illustration of how the default spatial relation might be used when CORESETs are configured on the CC is provided in **Figure 5.** When the gNB wants to maintain the same beam direction for all DL and UL communications, it may use the beam direction set for the PDCCHs on a CORESET for UL scheduling as well. The CORESET with lowest ID is used as the default CORESET, CORESET 0, that carries the scheduling information for the system information block and is available even before RRC connection is set that allows with UL communications during initial access.

Figure 5 hence illustrates an example scenario for the use of default spatial relation and pathloss reference RS assumptions using the SoTA (3GPP Rel. 16).

As shown in Figure 5:

gNB side:

**501.** The gNB identifies the spatial filter $b_{i,gNB}$ (beam direction) to be used for the transmission of PDCCHs after a beam sweep procedure.
**502.** The selected beam direction ($b_{i,gNB}$) is indicated for a CORESET $c_i$ via a TCI-state in a MAC-CE message
**503.** The gNB transmits the PDCCH(s) on CORESET $c_0$ (the CORESET with the lowest ID) using the spatial filter $b_{i,gNB}$.
**504.** For the UL transmissions, the gNB requires the UE to use the same beam direction/spatial filter as for the reception of the PDCCH(s) on CORESET $c_0$.
**505.** The beam direction $b_{i,gNB}$ is to be used for the UL transmission of SRS resource $s_i$. In this exemplary scenario, the gNB does not configure spatial relation for the SRS resource and pathloss reference RS for the corresponding SRS resource set.

UE side:

**506.** After beam sweeping, the UE determines that the best spatial filter to receive the gNB beam transmitted with spatial filter $b_{i,gNB}$ is $b_{i,UE}$.
**507.** The TCI state as indicated in the MAC-CE message transmitted by the gNB is applied to CORESET $c_i$, i.e., the spatial filter $b_{i,UE}$ is selected for the reception of PDCCH(s) on CORESET $c_i$.
**508.** The spatial filter $b_{i,UE}$ is used by the UE for the reception of the PDCCH(s) on CORESET $c_0$.
**509.** The UE applies the default spatial relation and pathloss reference RS to the SRS resource $s_i$, i.e., it uses the TCI-state of CORESET $c_0$ to determine the spatial relation and PL reference RS.
**510.** The SRS resource $s_i$ is transmitted using the spatial filter $b_{i,UE}$ with a Tx power derived from the corresponding pathloss reference RS

The deficiencies of the 3GPP Rel. 16 specification in addressing multi-TRP scenarios for UL sounding are apparent. When the UE is configured to receive multiple CORESETs from multiple TRPs or when PDSCHs are received from multiple TRPs, the UE defaults to a single TRP for the spatial relation and pathloss reference RS derivation according to the current NR specification. Hence, the default assumptions are not applicable in multi-TRP scenarios. Therefore, default spatial relations and pathloss reference RSs need to be defined for multi-TRP scenarios to perform beam management operations with reduced overhead and latency similar to the single-TRP scenario.

**SUMMARY**

In view of the above drawbacks, it is an objective of the embodiments herein to provide at least methods to determine (default) spatial relations and/or pathloss reference RSs for SRS that apply in both single-TRP and multi-TRP scenarios.
According to an aspect of some embodiments herein, there is provided a method performed by a UE, the method comprising: receiving, from a network node (e.g. a gNB), a higher layer configuration that associates a SRS resource or an SRS resource set comprising at least one SRS resource, with a control resource set pool index, wherein the control resource set pool index is a higher-layer parameter in a configuration of a CORESET; wherein the CORESET comprises resources on which a PDCCH is transmitted from the network node, and deriving a spatial relation or a reference signal, RS, as pathloss reference for said SRS resource or for said at least one SRS resource of the SRS resource set with reference to at least one reference signal, RS, from the QCL information of a CORESET associated with said control resource set pool index; wherein the QCL information comprises a relationship between one or more reference signals and demodulation reference signal, DMRS port(s) of the PDCCH, transmitted on the CORESET and the relationship indicates channel parameter(s) or reception type parameter(s) that are obtained from the reference signals.
According to an aspect of some embodiments herein, there is provided a method performed by a UE, the method comprising: receiving a MAC-CE message, from a network node, that associates at least an SRS resource or at least an SRS resource set with a control resource set pool index, wherein the control resource set pool index is a higher-layer parameter in a configuration of a CORESET, wherein the CORESET comprises resources on which a PDCCH is transmitted from the network node and deriving a spatial relation or a reference signal, RS, as pathloss reference for said SRS resource or for said at least one SRS resource of the SRS resource set with reference to at least one reference signal, RS, from the QCL information of a CORESET associated with said control resource set pool index; wherein the QCL information comprises a relationship between one or more reference signals and the DMRS port(s) of the PDCCH, transmitted on the CORESET and the relationship indicates channel parameter(s) or reception type parameter(s) that are obtained from the reference signals.

According to an aspect of some embodiments herein, there is provided a method performed by a UE, the method comprising: receiving a PDCCH from a network node, and deriving a spatial relation or a RS, as pathloss reference for an SRS resource or for at least one SRS resource of the SRS resource set triggered via the PDCCH that schedules one or more PDSCH(s), with reference to at least one RS from quasi-colocation, QCL information provided in a TCI-state of one of the PDSCH(s) scheduled by the PDCCH; wherein the QCL information of a PDSCH comprises a relationship between one or more reference signals and DMRS port(s) of the PDSCH and the relationship indicates channel parameter(s) or reception type parameter(s) that are obtained from the reference signals; and wherein the TCI-state is a higher layer configured parameter that comprises the QCL information.

According to yet another aspect of some embodiments herein, there is provided method performed by a network node, the method comprising: transmitting, to a UE, a higher layer configuration that associates a SRS, resource or an SRS resource set comprising at least one SRS resource, with a control resource set pool index, wherein the control resource set pool index is a higher-layer parameter in a configuration of a CORESET; wherein the CORESET comprises resources on which a PDCCH is transmitted from the network node, for enabling the UE to derive a spatial relation or a reference signal, RS, as pathloss reference for said SRS resource or for said at least one SRS resource of the SRS resource set with reference to at least one reference signal, RS, from the QCL information of a CORESET associated with said control resource set pool index; wherein the QCL information comprises a relationship between one or more reference signals and DMRS port(s) of the PDCCH, transmitted on the CORESET and the relationship indicates channel parameter(s) or reception type parameter(s) that are obtained from the reference signals; and receiving, from the UE, a SRS according to the spatial relation with a reference to a RS associated with the QCL information of the CORESET which is associated with said control resource set pool index.

According to another aspect of embodiments herein, there is provided a UE comprising a processor and a memory containing instructions executable by the processor, whereby said UE is operative to perform any one of the subject matters of claims 1-19.

According to another aspect of embodiments herein, there is provided a network node comprising a processor and a memory containing instructions executable by the processor, whereby said UE is operative to perform the method according to at least claim 21.

An advantage of embodiments herein is to reduce latency and overhead of control information for the beam direction (or spatial relation) indication of SRS transmissions.

There is also provided a computer program comprising instructions which when executed on at least one processor of the UE, cause the at least said one processor to carry out the method according to anyone claims 1-19.

There is also provided a computer program comprising instructions which when executed on at least one processor of the network node, cause the at least said one processor to carry out the method according to claim 21.

A carrier is also provided containing the computer program, wherein the carrier is one of a computer readable storage medium; an electronic signal, optical signal or a radio signal.

An advantage of embodiments herein is to reduce latency and overhead of control information for the beam direction (or spatial relation) indication of SRS transmissions.

Additional advantages of the embodiments herein are provided in the detailed description of this disclosure.

**BRIEF DESCRIPTION OF THE DRAWINGS**

Figure 1        depicts an RRC configuration of the TCI-state Information Element (state of the art (SoTA)).

Figure 2        illustrates an SRS resource set configuration (SoTA).

Figure 3        shows SRS resource configuration (SoTA).

Figure 4        is an example scenario of a SRS spatial relation and pathloss reference RS configuration in FR2 (SoTA).

Figure 5        is another example scenario for the use of default spatial relation and pathloss reference RS assumption using the SoTA.

Figure 6        illustrates a configuration of an SRS resource comprising a higher-layer parameter *CORESETpoolIndex* according to an embodiment.

Figure 7        depicts a SRS resource list and association with the *CORESETpoolIndex.*

Figure 8        depicts a SRS resource set list and association with the *CORESETpoolIndex.*

Figure 9        illustrates a flowchart of a method performed by a UE according to some embodiments.

Figure 10      illustrates a flowchart of a method performed by a UE according to some embodiments.

Figure 11    illustrates a flowchart of a method performed by a UE according to some embodiments.

Figure 12    illustrates a flowchart of a method performed by a network node according to some embodiments.

Figure 13    illustrates a block diagram depicting a UE according to some embodiments herein.

Figure 14    illustrates a block diagram depicting a network node according to some embodiments herein.

## DETAILED DESCRIPTION

In the following, a detailed description of the exemplary embodiments is described in conjunction with the drawings, in several scenarios to enable easier understanding of the solution(s) described herein.

In the present embodiments, and as previously described, methods are provided to determine default spatial relations and/or pathloss reference RSs for SRS that apply in both single-TRP and multi-TRP scenarios.

Solutions for pathloss reference RS and spatial relation for SRS are discussed for various multi-TRP scenarios. Two sets of solutions are discussed:

   1) Using only higher layer configuration of the SRS to indicate which TRP the spatial relation must follow.

   2) Using layers below RRC to indicate the TRP association with SRS.

In addition, the solutions also deal with the scenarios that the Carrier Component (CC) that has multi-TRP links for PDSCH may or may not have CORESETs configured in it.

Further, the issue of deriving the UL beams for the UE from the beams of DL channels for SRS is described. The derivation of beam properties such as beam direction (or spatial relation) and the DL RS used as pathloss reference for power control are further disclosed. The solutions proposed are intended to address issues that concern beamformed multi-TRP (Transmit-Receive Point) communications that are common in FR2 deployments. A TRP may be viewed as a network node or gNB.

It is noted that the information in the above section is for enhancing the understanding of the background of the present embodiments according to the present invention, and it may contain information that does not form prior art or is already known to a person of ordinary skill in the art.

It is further noted that several embodiments described in the following may be implemented individually or in combination. In other words, some or all of the described embodiments may be combined - unless mutually exclusive.

Configuration and indication of TRP association for SRS

A *CORESETpoolIndex* is a parameter introduced in 3GPP Rel. 16 [4] in the configuration of a CORESET. This parameter or this index essentially groups CORESETs into different pools according to the TRPs they are associated to in the case of multi-TRP transmissions. The PDCCHs transmitted on the CORESETs configured with the same *CORESETpoolIndex* value are considered to be associated with the same TRP.

When a UE is configured, by the network node, with multiple *CORESETpoolIndex* values, the UE understands that it may receive PDSCHs from multiple TRPs, possibly overlapped in time and frequency domains, scheduled by multiple PDCCHs that are received on CORESETs configured with different *CORESETpoolIndex* values. The UE may also receive multiple PDSCHs from multiple TRPs scheduled by a single PDCCH when the TCI indication field in the DCI points to multiple TCI-states [4].

*Default spatial relation for SRS via higher layer configuration*

When an SRS resource is not configured with a spatial relation, in 3GPP Rel. 16, it is obtained from the TCI-state of a CORESET or a PDSCH [3-4]. This prior art solution, however, is applicable only in single-TRP scenarios. In multi-TRP scenarios, the spatial relation may be derived from the QCL assumptions of a CORESET associated with a TRP via the *CORESETpoolIndex.* Such an association allows a UE to automatically modify the spatial relation for the associated SRS resource(s), without any explicit indication of the spatial relation from the network node.

In accordance with an exemplary embodiment, the UE is configured to receive from the gNB, or any other network entity, a higher layer configuration or a higher layer indication that associates an SRS resource or an SRS resource set with a value of a *CORESETpoolIndex.* When the UE receives such a configuration or indication, the UE derives the spatial relation for the indicated SRS resource, or the spatial relation(s) of the SRS resource(s) of the indicated SRS resource set with reference to one of the RSs from the QCL assumptions of a CORESET belonging to the indicated *CORESETpoolIndex.* For example, when said SRS resource is not configured with any spatial relation, the UE shall transmit the SRS according to the spatial relation, if applicable, with a reference to the RS with 'QCL-Type-D' corresponding to the QCL assumption of the CORESET with the lowest ID among the CORESETs belonging to the indicated *CORESETpoolIndex.* Similarly, when the SRS resource(s) of said SRS resource set are not configured with any spatial relation(s), the UE shall transmit the SRS(s) according to the spatial relation, if applicable, with a reference to the RS with 'QCL-Type-D' corresponding to the QCL assumption of the CORESET with the lowest ID belonging to the indicated *CORESETpoolIndex.* In the present examples, the UE is configured to derive the spatial relations based on the CORESET with the lowest ID. Note that the embodiment is not restricted only to the case of the CORESET with lowest ID. Instead of the lowest ID, any other ID may be used as well.

A CORESET *belonging* to or associated with a CORESETpoolIndex means that the higher layer configuration of the CORESET comprises said CORESETpoolIndex value.

Hence, according to an exemplary embodiment herein, the UE is configured to receive from a network node (e.g. a gNB), a higher layer configuration that associates a SRS, resource or an SRS resource set comprising at least one SRS resource, with a *CORESETpoolIndex,* wherein the *CORESETpoolIndex* is, as mentioned above, a higher-layer parameter in a configuration of a CORESET. The CORESET comprises resources on which a physical downlink control channel, PDCCH, is transmitted from the network node, and deriving a spatial relation or a reference signal, RS, as pathloss reference for said SRS resource or for said at least one SRS resource of the SRS resource set with reference to at least one reference signal, RS, from the quasi-colocation, QCL, information of a CORESET belonging to the indicated *CORESETpoolIndex;* wherein the QCL information comprises a relationship between one or more reference signals and demodulation reference signal, DMRS, port(s) of the PDCCH, transmitted on the CORESET and the relationship indicates channel parameter(s) or reception type parameter(s) that are obtained from the reference signals.

There are different QCL types defined in 3GPP Rel. 16 [4] which are repeated below:

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

The above higher layer configuration or indication associates a SRS resource or the SRS resource(s) of an SRS resource set with a TRP. By doing so, UEs that satisfy the beam correspondence property as described in [7], [8] can determine the beam direction for uplink SRS transmissions with respect to the TRP, without any explicit indication of the beam direction from the gNB. This means when the TCI-state for the CORESET which is associated with the SRS resource or with the SRS resource(s) of a SRS resource set is modified by DL signaling from the network node and the SRS resource(s) are not configured with any spatial relation, the UE automatically modifies the spatial relation for the associated SRS resource(s). Therefore, the above approach reduces latency and overhead of control information for the beam direction indication of SRS transmissions.

Different alternatives are discussed in the following for the association of an SRS resource, or the SRS resource(s) of an SRS resource set to a *CORESETpoolIndex.*

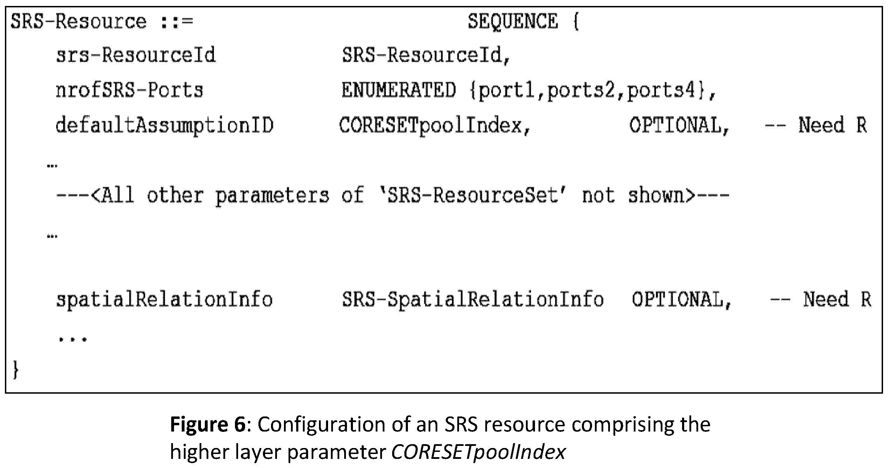

In an exemplary embodiment, the higher layer configuration of an SRS resource comprises the higher layer parameter *CORESETpoolIndex,* as shown in **Figure 6.**

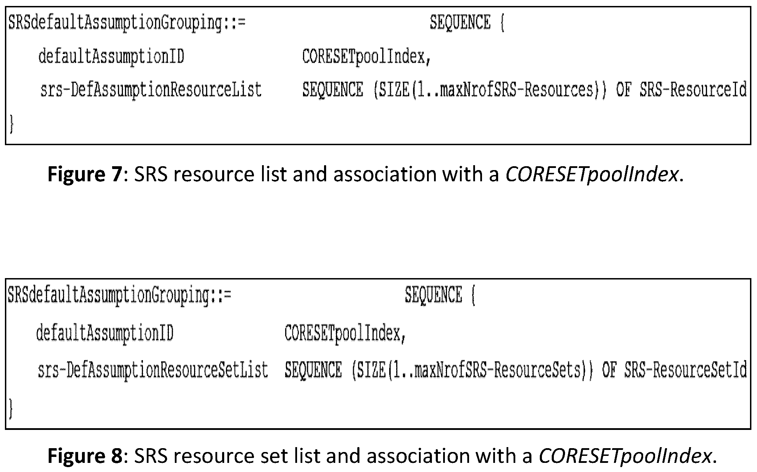

In another exemplary embodiment, the higher layer configuration that associates an SRS resource or an SRS resource set with a *CORESETpoolIndex* is an information element (IE) that comprises a list of SRS resource(s) or SRS resource set(s) and a CORESETpoolIndex. Examples of such higher layer configurations entitled as *'SRS-defaultAssumptionGrouping'* are shown in **Figure 7** and **Figure 8.**

In Figure 7, the higher layer configuration is shown comprising a SRS resource list with a CORESETpoolIndex.

In Figure 8, the higher layer configuration is shown comprising a SRS resource set list with a CORESETpoolIndex.

*Default pathloss reference RS for SRS via higher layer configuration*

For SRS transmissions in multi-TRP scenarios, the UE also needs to adjust its transmit power settings according to the intended TRP. As mentioned earlier, the pathloss reference RS is used to calculate/derive the pathloss estimate, which is used in determining the transmit power of the SRS [3]. Moreover, in FR2 scenarios, where beamformed transmissions are used, the pathloss reference and the spatial relation may be derived from an RS indicated in the downlink to the UE. This means the DL RS (e.g., indicated via the TCI state) used as a reference to obtain the beam direction for receiving the DL RS at the UE may be used as a reference in the calculation of the pathloss estimate for the Tx power calculation of the UL transmission. Therefore, in a multi-TRP scenario, the pathloss reference RS may be associated with one of the RSs from the QCL assumptions of a CORESET belonging to the *CORESETpoolIndex* associated with the intended TRP. Such an association allows a UE to automatically modify the pathloss reference RS for the associated SRS resource(s) as the DL beam changes, without any explicit indication of the pathloss reference RS from the network node.

In accordance with an exemplary embodiment, when the UE receives a higher layer configuration or a higher layer indication that associates an SRS resource or an SRS resource set with a value of a *CORESETpoolIndex,* the UE

uses or employs one of the RSs from the QCL assumptions of a CORESET belonging to the indicated *CORESETpoolIndex* as the pathloss reference RS for the indicated SRS resource, or the SRS resource(s) of the indicated SRS resource set.

For example, when the indicated SRS resource is not configured with any pathloss reference RS, the UE takes the RS with 'QCL-Type-D' corresponding to the QCL assumption of the CORESET with the lowest ID belonging to the indicated *CORESETpoolIndex* as the pathloss reference RS for the SRS resource.

In another example, when the SRS resource(s) of the indicated SRS resource set are not configured with any pathloss reference RS(s), the UE takes the RS with 'QCL-Type-D' corresponding to the QCL assumption of the CORESET with the lowest ID among the CORESETs belonging to the indicated *CORESETpoolIndex* as the pathloss reference RS for the SRS resource(s) in the SRS resource set. Note that the exemplary embodiment is not restricted only to the case of the CORESET with the lowest ID. Instead of the lowest ID, any other ID may be used as well.

The above TRP associations with SRS may only be used in multi-TRP scenarios. The network node may indicate to the UE when it shall transmit SRS using the default assumption on spatial relation and pathloss reference RS introduced above. Two different options are proposed in the following two exemplary embodiments.

In accordance with an exemplary embodiment, the UE is configured to receive a higher layer parameter that indicates to the UE that it shall transmit SRS using the default spatial relation and/or pathloss reference RS assumptions introduced above.

In accordance with another exemplary embodiment, the UE is configured to transmit SRS using the default spatial relation and/or pathloss reference RS assumptions introduced above when more than one value is configured for *CORESETpoolIndex*, or if *CORESETpoolIndex* is configured.

*Application of default assumptions to selective SRS usages*

SRS transmissions are typically used before PUSCH transmissions for link adaptation and uplink beamforming. SRS for beam management is used to sound the uplink channel to identify suitable beam directions to the network node, and hence it may not necessarily be required for SRS with usage 'beamManagement' to follow the default assumptions on spatial relation and pathloss reference RS introduced above. Therefore, the above approaches on the default assumptions may be restricted to specific SRS usages such as 'codebook' and 'nonCodebook' SRS transmissions which are typically after beam direction indication. The parameter 'usage' was previously described as a parameter used in a SRS resource set configuration (see Figure 2).

The default assumptions may be applied only to specific SRS usages (such as 'codebook' and 'nonCodebook', for example) by default or the SRS usages for which the default assumptions are applicable may be signaled to the UE. The following exemplary embodiments provide signaling methods to indicate to the UE to apply the default assumptions on spatial relation and pathloss reference RS to selective SRS usages.

In accordance with some exemplary embodiments, the UE is configured to receive, from a network node, a higher layer configuration or parameter that comprises a list of values of the parameter 'usage' used in the SRS configuration to indicate that the UE shall transmit SRS configured with the indicated usages using the default spatial relation and/or pathloss reference RS described above.

For example, when the UE is configured with a parameter titled *'enableDefaultAssumptionForSRSInUsage'* containing the values {'codebook', 'nonCodebook'}, the UE applies the default spatial relation and/or pathloss reference RS assumptions to SRS resource(s) of SRS resource set(s) that are configured with the usage 'codebook' or 'nonCodebook'.

A higher layer parameter may also be used to indicate a default spatial relation and/or pathloss reference RS assumption for SRS transmissions with a specific usage as described in the following exemplary embodiment.

In accordance with some exemplary embodiments, the UE is configured to receive a higher layer configuration or parameter that comprises a list of values of the parameter 'usage' used in the SRS configuration to indicate that the UE shall transmit SRS configured with the indicated usages using the default spatial relation and/or pathloss reference RS as following the procedure described in the New Radio (NR) specification [3], [4].

For example, when the UE is configured with a parameter titled *'enableDefaultAssumptionForSRSInUsage'* containing the values {'codebook', 'nonCodebook'}, the UE applies the default spatial relation and/or pathloss reference RS assumptions to SRS resource(s) of SRS resource set(s) that are configured with the usage 'codebook' and/or 'nonCodebook'.

The selective application of the default assumptions on spatial relation and/or pathloss reference RS may also be enabled by configuring an explicit parameter per SRS usage explained in the following exemplary embodiment.

In accordance with some exemplary embodiments, the UE is configured to receive a higher layer parameter indicating an association of the default spatial relation and/or pathloss reference RS to SRS resource(s) or to SRS resources of SRS resource set(s) configured with a specific *'usage'*. In one example, if the parameter *'enableDefaultAssumptionforCBSRS'* is configured, the UE shall transmit SRS using the default spatial relation and/or pathloss reference RS assumptions configured with the usage 'codebook'. In one example, if the parameter *'enableDefaultAssumption-*

*forNCBSRS'* is configured, the UE shall transmit SRS using the default spatial relation and/or pathloss reference RS assumptions configured with the usage 'nonCodebook'. The default assumptions mentioned here may be the ones from the state of the art or as the ones described above.

*TRP association of SRS via MAC and PHY layers*

A drawback of the above higher layer configuration for the default spatial relation and pathloss reference RS for SRS transmissions is that a complete reconfiguration (e.g., via RRC) is required when a TRP association with an SRS is changed. Therefore, the following exemplary embodiments provide procedures for changing or updating a TRP association with an SRS via a lower (MAC or physical) layer to reduce the latency for control information signaling.

For semi-persistent (SP)-SRS transmissions, a MAC-CE command or message received by the UE activates or deactivates the transmission. The MAC-CE command may carry a field that indicates the TRP association, so that the spatial relation and the pathloss reference RS for the SRS may be determined without explicit indication of the same.

In accordance with some exemplary embodiments, the UE is configured to receive, from a network node, a MAC-CE message comprising an indication of a *CORESETpoolIndex* for the activation of a SP-SRS transmission. The MAC-CE message may comprise, for example, a *'CORESETpoolIndexIndicator* field that indicates or maps to a *CORESETpoolIndex* value.

When the UE receives the MAC-CE message, it derives the spatial relation and/or the pathloss reference RS of the activated SP-SRS with reference to one of the RSs from the QCL assumptions of a CORESET belonging to the *CORESETpoolIndex* indicated by the *CORESETpoolIndexIndicator.*

For example, the UE derives the spatial relation and/or pathloss reference RS, if applicable, with a reference to the RS with 'QCL-Type-D' corresponding to the QCL assumption of the CORESET with the lowest ID belonging to the *CORESETpoolIndex* indicated by the *CORESETpoolIndexIndicator.*

The above feature may be enabled by a higher layer parameter that indicates whether the MAC-CE message used for the activation of an SP-SRS contains the aforementioned 'CORESETpoolIndexIndicator' field or not.

In accordance with some exemplary embodiments, the UE is configured to receive a higher layer parameter that indicates whether the MAC-CE message used to activate an SP-SRS contains a field that indicates or maps to a *CORESETpoolIndex.* Upon reception of the parameter, the UE expects the SP-SRS activation MAC-CE to contain a field that indicates or maps to a *CORESETpoolIndex.*

In the case of a-periodic SRS transmissions, the PDCCH, from the network node, indicates the trigger of SRS transmissions to the UE. In the following, it is proposed to associate the PDCCH with the triggered SRS resource set(s).

In accordance with some exemplary embodiments, the UE is configured to receive from the gNB or any other network entity, a higher layer parameter that indicates to the UE whether the UE may derive the spatial relation and/or pathloss reference RS for the SRS resource(s) of one or more SRS resource set(s) triggered via a PDCCH with reference to one of the RSs from the QCL assumptions of the CORESET on which the PDCCH is transmitted. Since each CORESET may belong to a specific TRP via a *CORESETpoolIndex,* the PDCCH(s) transmitted on the CORESET that trigger(s) the SRS determine(s) the associated TRP dynamically via the physical layer. By doing so, the signaling of the TRP association for SRS can be performed at a lower latency than RRC reconfiguration.

As mentioned above, performing the TRP association for SRS via MAC-layer-based or PHY-layer-based signaling reduces control information signaling latency over RRC- or any other higher layer-based signaling. In this regard, MAC-CE messages provide a high flexibility.

In one extension of the MAC-CE message signaling introduced above, a MAC-CE message may be used to configure a TRP association to SRS resources or to SRS resource(s) of a SRS resource set, regardless of the time-domain behavior (periodic or semi-persistent or aperiodic) of the SRS transmission.

In accordance with embodiments, the UE is configured to receive a MAC-CE message that comprises at least a serving cell ID, an SRS resource ID (or an SRS resource set ID) and a *CORESETpoolIndex ID.* When the UE receives the MAC-CE message, it derives the spatial relation and/or the pathloss reference RS of the indicated SRS resource or SRS resource set using one of the RSs from the QCL assumptions of a CORESET belonging to the indicated *CORE-SETpoolIndex.* For example, the UE derives the spatial relation and/or pathloss reference RS, if applicable, with a reference to the RS with 'QCL-Type-D' corresponding to the QCL assumptions of the CORESET with the lowest ID among the CORESETs belonging to the indicated *CORESETpoolIndex.*

The MAC-CE message used to update the pathloss reference RS for SRS may also be used to indicate the TRP association for SRS.

In accordance with some exemplary embodiments, the UE is configured to receive a *CORESETpoolIndex* in the MAC-CE message used to indicate/update the pathloss reference RS of an SRS resource or SRS resource set. When the UE receives the MAC-CE message, it associates the SRS resource or SRS resource set indicated in the MAC-CE to the indicated *CORESETpoolIndex.* The update of spatial relation and/or pathloss reference RS for the SRS resource or SRS resource set indicated in the MAC-CE message may therefore be derived with reference to one of the RSs from the QCL assumptions of a CORESET belonging to the indicated CORESETpoolIndex. The presence of the *CORESETpoolIndex* in the MAC-CE message may additionally be indicated to the UE via a higher layer parameter.

For example, if the parameter is configured and optionally, set to 'enabled', the UE expects the MAC-CE message used to update the SRS pathloss reference RS to contain a *CORESETpoolIndex* value. If the parameter is not configured, the UE does not expect said MAC-CE to contain a *CORESETpoolIndex.*

In all the methods described above that use a CORESET as a reference to derive the spatial relation or pathloss reference RS, the CORESET may refer to one that is associated with a monitored search space in the latest slot, in which one or more CORESETs are monitored within the active DL bandwidth-part by the UE.

## Default SRS properties for cells without CORESETs and Single-PDCCH-based multi-TRP

The above default assumptions on spatial relation and pathloss reference RS for SRS can be applied when CORESET(s) are configured on a component carrier (CC) and are associated with multiple TRPs via the *CORESETpoolIndex.* However, it is possible that multi-TRP transmissions for PDSCH(s) on a CC are scheduled by CORESET(s) on a different CC, or a single PDCCH is associated with a CORESET scheduling PDSCH(s) transmitted from multiple TRPs. In such cases, there may be no *CORESETpoolIndex* configured on the CC, where the PDSCH(s) are transmitted. Therefore, obtaining the default spatial relation and/or pathloss reference RS for SRS transmissions to different TRPs in such scenarios, without an explicit parameter such as the *CORESETpoolIndex,* may be performed differently from the methods described above.

In the following, the case of single-PDCCH based multi-TRP transmission is discussed. For SRS triggered via a PDCCH that schedules multiple PDSCHs, the default spatial relation and/or pathloss reference RS may be obtained as follows:

When m PDSCHs are scheduled in a serving cell $s_i$ by a single PDCCH from a serving cell $s_j$, where m > 1, the *n*-bit TCI-field in the PDCCH (3 bits in 3GPP Rel. 16) maps to m TCI-states that are configured via a higher layer in the cell to indicate the reception of m PDSCHs. In this case, if an SRS is triggered by the scheduling PDCCH, the UE may obtain the spatial relation and pathloss reference RS for the SRS from the QCL assumptions for the scheduled PDSCHs. *m* can take any suitable value. The TCI-state of the PDSCH to be used for that purpose may be indicated via a higher layer.

In accordance with some exemplary embodiments, the UE is configured to obtain the pathloss reference RS and/or spatial relation for an SRS resource or for the SRS resource(s) of an SRS resource set triggered via a PDCCH scheduling PDSCH(s) with reference to an RS from the QCL assumptions in the TCI-state of one of the PDSCH(s) scheduled by the TRP.

For example, the spatial relation and/or pathloss reference RS for the SRS resource/resource set triggered via a PDCCH may be derived with reference to one of the RSs from the QCL assumptions in the TCI-state with the lowest ID among the ones indicated in the PDCCH for the PDSCH(s) scheduled by the PDCCH.

The above approach can be extended by choosing which TCI-state from the ones indicated for the PDSCHs scheduled by the PDCCH needs to be used to derive the spatial relation and/or the pathloss reference RS of the SRS triggered by the PDCCH.

In accordance with some exemplary embodiments, the UE is configured to obtain a higher layer parameter that indicates one of the *m* TCI-states indicated in a PDSCH-scheduling-PDCCH to be chosen to obtain the pathloss reference RS and/or spatial relation for an SRS resource or the SRS resource(s) of an SRS resource set triggered via the PDCCH.

For example, if the parameter contains the value '0', the spatial relation and/or pathloss reference RS for the SRS resource or the SRS resource(s) of an SRS resource set triggered via a PDCCH may be derived with reference to one of the RSs from the QCL assumptions in the TCI-state with the lowest ID among the ones indicated for the PDSCHs scheduled by the PDCCH.

In another example, if the parameter contains the value '1', the spatial relation and/or pathloss reference RS for the SRS resource/resource set triggered via a PDCCH may be derived with reference to one of the RSs from the QCL assumptions in the TCI-state with the second lowest ID among the ones indicated for the PDSCHs scheduled by the PDCCH. The TRP association is thus indirectly modified via the TCI-states of the PDSCHs.

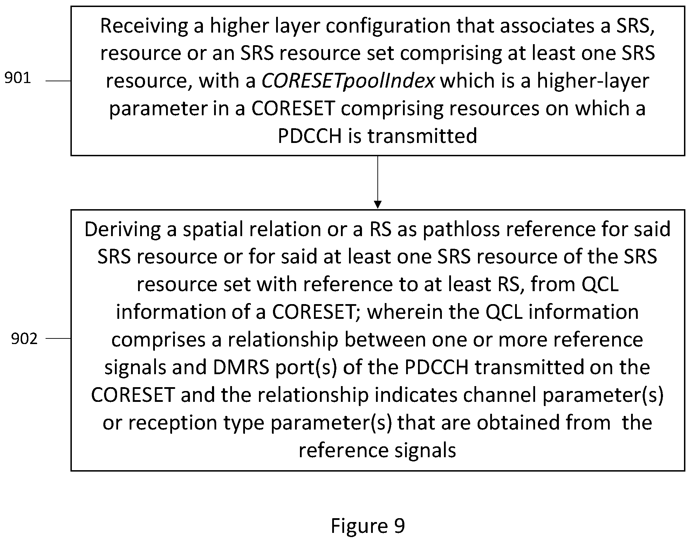

Referring to **Figure 9,** there is illustrated a flowchart of a method performed by a UE according to previously described embodiments. As shown, the method comprises:

(901) receiving, from a network node, a higher layer configuration that associates a SRS, resource or an SRS resource set comprising at least one SRS resource, with a *CORESETpoolIndex,* wherein the *CORESETpoolIndex* is a higher-layer parameter in a configuration of a CORESET; wherein the CORESET comprises resources on which a PDCCH is transmitted from the network node, and

(902) deriving a spatial relation or a RS as pathloss reference for said SRS resource or for said at least one SRS resource of the SRS resource set with reference to at least one RS from QCL information of a CORESET associated with the CORESETpoolIndex; wherein the QCL information comprises a relationship between one or more reference signals and DMRS port(s) of the PDCCH, transmitted on the CORESET and the relationship indicates channel parameter(s) or reception type parameter(s) that are obtained from the reference signals.

As previously described, the method further comprises transmitting, to the network node, a SRS according to the spatial relation with a reference to a RS associated with the QCL information of a CORESET which is associated with said *CORESETpoolIndex,* having the lowest ID, i.e. the CORESET with the lowest ID among the CORESETS belonging to the *CORESETpoolIndex.* Note however that the embodiments herein are not restricted only to the case of the CORESET with lowest ID. Instead of the lowest ID, any other suitable ID may be used as well

According to an embodiment, the method comprises transmitting, to the network node, a SRS with a transmit power that is derived from a pathloss estimate with a reference to a RS associated with the QCL information of the CORESET which is associated with said *CORESETpoolIndex,* having the lowest ID, i.e. the CORESET with the lowest ID among the CORESETS belonging to the *CORESETpoolIndex.*

According to an embodiment, the higher layer configuration is an IE comprising a list of at least one SRS resource or at least one SRS resource set and further comprising a *CORESETpoolIndex.*

According to an embodiment, the method comprises transmitting, to the network node, a SRS using the derived spatial relation and/or the pathloss reference RS when more than one value is configured for *CORESETpoolIndex.*

According to an embodiment, the method further comprises receiving, from the network node, a higher layer configuration comprising a list of values of a parameter (e.g. 'usage') used in an SRS configuration to indicate that the UE transmits a SRS configured with the indicated parameter using the spatial relation and/or a pathloss reference RS.

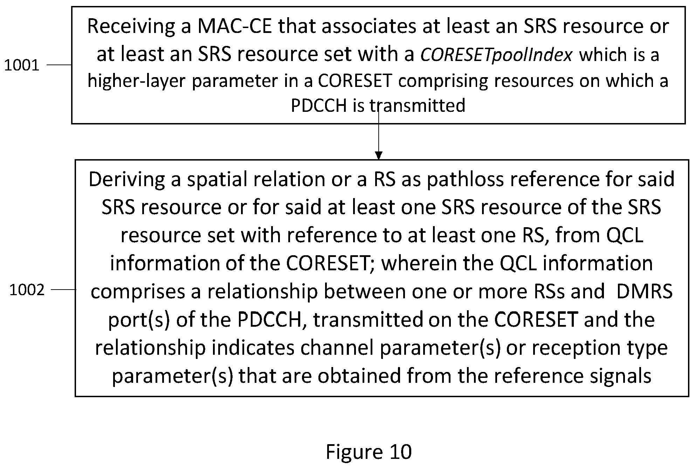

Referring to **Figure 10,** there is illustrated a flowchart of a method performed by a UE according to some exemplary embodiments. As shown, the method comprises:

(1001) receiving a MAC-CE from a network node, that associates at least an SRS resource or at least an SRS resource set with a *CORESETpoolIndex* which is a higher-layer parameter in a configuration of a CORESET, wherein the CORESET comprises resources on which a PDCCH is transmitted from the network node; and

(1002) deriving a spatial relation or a RS as pathloss reference for said SRS resource or for said at least one SRS resource of the SRS resource set with reference to at least one RS from the QCL information of a CORESET associated with the *CORESETpoolIndex;* wherein the QCL information comprises a relationship between one or more reference signals and the DMRS port(s) of the PDCCH, transmitted on the CORESET and the relationship indicates channel parameter(s) or reception type parameter(s) that are obtained from the reference signals.

According to an embodiment, the method comprises receiving from the network node a MAC-CE comprising at least a serving cell ID, an SRS resource ID or an SRS resource set ID and a *CORESETpoolIndex*

According to an embodiment, the method comprises receiving, from the network node, a MAC-CE message for the activation of a SP-SRS with the *CORESETpoolIndex.*

According to an embodiment, the method comprises receiving, from the network node, a MAC-CE message for the update of the pathloss reference RS for SRS with the *CORESETpoolIndex.*

According to an embodiment, the method comprises transmitting, to the network node, said SRS according to the spatial relation with a reference to a RS associated with the QCL information of the CORESET which is associated with said *CORESETpoolIndex,* having the ID, i.e. the CORESET with the lowest ID among the CORESETS belonging to the *CORESETpoolIndex.*

According to an embodiment, the method comprises transmitting, to the network node, said SRS with a transmit power derived using the pathloss estimate with a reference to a RS associated with the QCL information of the CORESET which is associated with said *CORESETpoolIndex,* having the lowest ID, i.e. the CORESET with the lowest ID among the CORESETS belonging to the *CORESETpoolIndex.*

The method according to an embodiment, comprises receiving, from the network node, a higher layer parameter indicating whether the MAC-CE message contains a field that indicates a *CORESETpoolIndex* or a field that maps to the control resource set

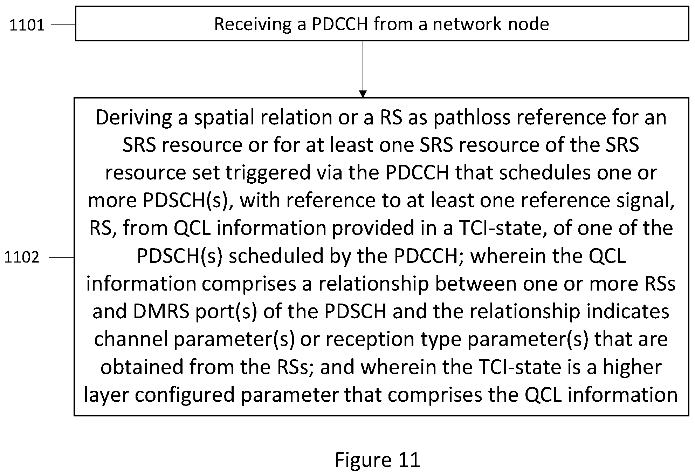

Referring to **Figure 11,** there is illustrated a flowchart of a method performed by a UE. As shown the method comprises:

(1101) receiving a PDCCH from a network node; and

(1102) deriving a spatial relation or a RS as pathloss reference for an SRS resource or for at least one SRS resource of the SRS resource set triggered via the PDCCH that schedules one or more PDSCH(s), with reference to at least one RS from QCL information provided in a TCI-state of one of the PDSCH(s) scheduled by the PDCCH; wherein the QCL information of a PDSCH comprises a relationship between one or more reference signals and DMRS port(s) of the PDSCH and the relationship indicates channel parameter(s) or reception type parameter(s) that are obtained from the reference signals; and wherein the TCI-state is a higher layer configured parameter that comprises the QCL information.

According to an embodiment, the method comprises transmitting, to the network node, said SRS according to the spatial relation with a reference to a RS associated with the QCL information provided in the TCI-state with the lowest ID among the ones indicated in the PDCCH scheduling the PDSCH(s).

According to an embodiment, the method comprises comprising transmitting, to the network node, said SRS with a transmit power derived using a pathloss estimate with a reference to a RS associated with the QCL information provided in the TCI-state with the lowest ID among the ones indicated in the PDCCH scheduling the PDSCH(s).

The method further comprises receiving, from the network node, a , a higher layer parameter that indicates the TCI-state to be chosen from the ones indicated for the PDSCH(s) scheduled by the PDCCH to derive the spatial relation and/or pathloss reference RS for the SRS.

According to an embodiment, the method performed by the UE may comprise, receiving a PDCCH from the network node and deriving a spatial relation or a RS as pathloss reference for an SRS resource or for at least one SRS resource of the SRS resource set triggered via the PDCCH that schedules one or more PDSCH(s), with reference to at least one RS from QCL information of the CORESET on which the PDCCH is transmitted; wherein the QCL information comprises the relationship between one or more reference signals and demodulation reference signal, DMRS, port(s) of the PDCCH, transmitted on the CORESET and the relationship indicates channel parameter(s) or reception type parameter(s) that are obtained from the reference signals. The method may further comprises receiving a higher layer parameter indicating whether to derive the spatial relation or pathloss reference RS for said SRS resource or SRS resource set from the QCL information of said CORESET.

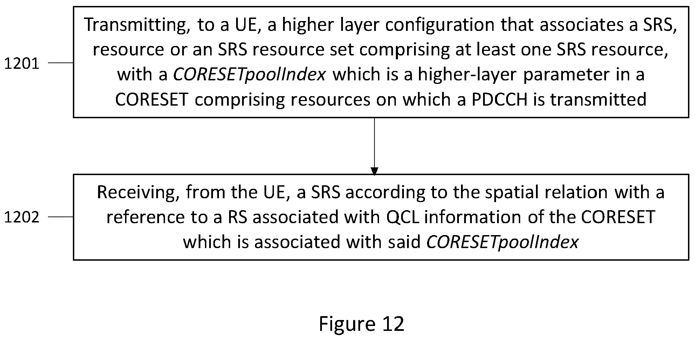

Referring to **Figure 12,** there is illustrated a flowchart of a method performed by a network node (e.g. a gNB) according to some exemplary embodiments. As shown, the method comprises:

(1201) transmitting to a UE a higher layer configuration that associates a SRS resource or an SRS resource set comprising at least one SRS resource, with a *CORESETpoolIndex* which is a higher-layer parameter in a CORESET; wherein the CORESET comprises resources on which a PDCCH is transmitted from the network node, for enabling the UE to derive a spatial relation or a reference signal, RS, as pathloss reference for said SRS resource or for said at least one SRS resource of the SRS resource set with reference to at least one RS from QCL, information of a CORESET associated with said CORESETpoolIndex; wherein the QCL information comprises a relationship between one or more RSs and DMRS port(s) of the PDCCH transmitted on the CORESET and the relationship indicates channel parameter(s) or reception type parameter(s) that are obtained from the RSs; and

(1202) receiving, from the UE, a SRS according to the spatial relation with a reference to a RS associated with the QCL information of the CORESET which is associated with *CORESETpoolIndex.* As previously described, the CORESET may have the lowest ID among the CORESETs associated with or belonging to the CORESETpoolIndex.

According to an embodiment, the method performed by the network node may receiving from the UE a SRS using the derived spatial relation and/or pathloss reference RS when more than one value is configured for the *CORESETpoolIndex.*

According to an embodiment, the method comprises transmitting, to the UE, a MAC-CE message that associates at least an SRS resource or at least an SRS resource set with a *CORESETpoolIndex,* wherein the *CORESETpoolIndex* is a higher-layer parameter in a configuration of a CORESET which comprises resources on which a PDCCH is transmitted from the network node to the UE. This enables the UE to derive the spatial relation or a RS as pathloss reference as previously explained.

The content of the MAC-CE message may include a serving cell ID, an SRS resource ID or an SRS resource set ID and the *CORESETpoolIndex.*

According to an embodiment, the method performed by the network node comprises receiving from the UE said SRS with a transmit power derived using the pathloss estimate with a reference to a RS associated with the QCL information of the CORESET which is associated with said *CORESETpoolIndex,* having the lowest ID, i.e. the CORESET with the lowest ID among the CORESETS belonging to the *CORESETpoolIndex*

According to an embodiment, the method performed by the UE comprises, transmitting a PDCCH to the UE for enabling the UE to derive the spatial relation nor the RS as pathloss reference as previously described.

According to an embodiment, the method performed by the network comprises receiving from the UE said SRS with a transmit power derived using a pathloss estimate with a reference to a RS associated with the QCL information provided in the TCI-state with the lowest ID indicated in the PDCCH scheduling the PDSCH(s).

According to an embodiment, the method comprises transmitting to the UE a higher layer parameter that indicates the TCI-state to be chosen from the ones indicated for the PDSCH(s) scheduled by the PDCCH to derive the spatial relation and/or pathloss reference RS for the SRS.

Additional actions performed by the network node and additional actions performed by the UE have already been described and need not be repeated.

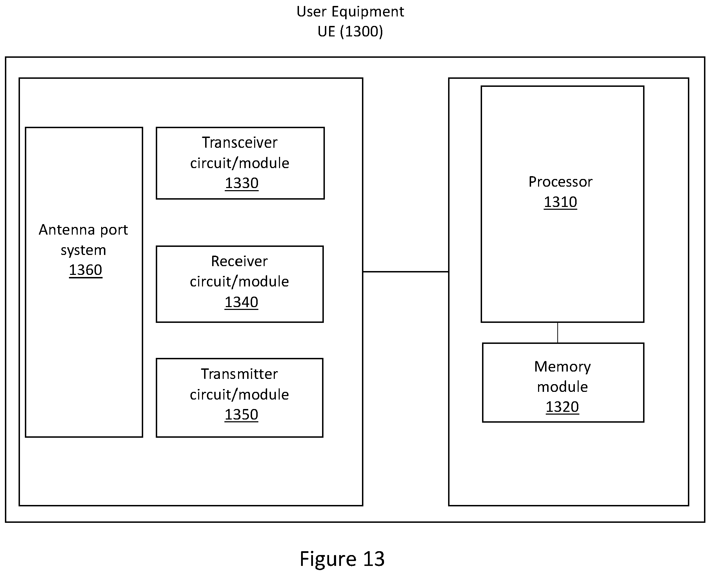

In order to perform the previously described process or method steps performed by the UE according to claims 1-19, there is also provided a UE. **Figure 13** illustrates a block diagram depicting a UE. The UE 1300 comprises a processor 1310 or processing circuit or a processing module or a processor or means 1310; a receiver circuit or receiver module 1340; a transmitter circuit or transmitter module 1350; a memory module 1320 a transceiver circuit or transceiver module 1330 which may include the transmitter circuit 1350 and the receiver circuit 1340. The UE 1300 further comprises an antenna system 1360 which includes antenna circuitry for transmitting and receiving signals to/from at least the network node. The antenna system employ beamforming as previously described. The actions performed by the UE have already been described.

The UE 1300 may belong to any radio access technology including 4G or LTE, LTE-A, 5G, advanced 5G or a combination thereof that support beamforming technology. The UE comprising the processor and the memory contains instructions executable by the processor, whereby the UE 1300 is operative to perform any one of the subject-matter of claims 1-19.

The processing module/circuit 1310 includes a processor, microprocessor, an application specific integrated circuit (ASIC), field programmable gate array (FPGA), or the like, and may be referred to as the "processor." The processor 1410 controls the operation of the network node and its components. Memory (circuit or module) 1320 includes a random access memory (RAM), a read only memory (ROM), and/or another type of memory to store data and instructions that may be used by processor 1310. In general, it will be understood that the network node in one or more embodiments includes fixed or programmed circuitry that is configured to carry out the operations in any of the embodiments disclosed herein.

In at least one such example, the processor 1310 includes a microprocessor, microcontroller, DSP, ASIC, FPGA, or other processing circuitry that is configured to execute computer program instructions from a computer program stored in a non-transitory computer-readable medium that is in or is accessible to the processing circuitry. Here, "non-transitory" does not necessarily mean permanent or unchanging storage, and may include storage in working or volatile memory, but the term does connote storage of at least some persistence. The execution of the program instructions specially adapts or configures the processing circuitry to carry out the operations disclosed in this disclosure including the method according to anyone of claims 1-19. Further, it will be appreciated that the UE 1300 may comprise additional components.

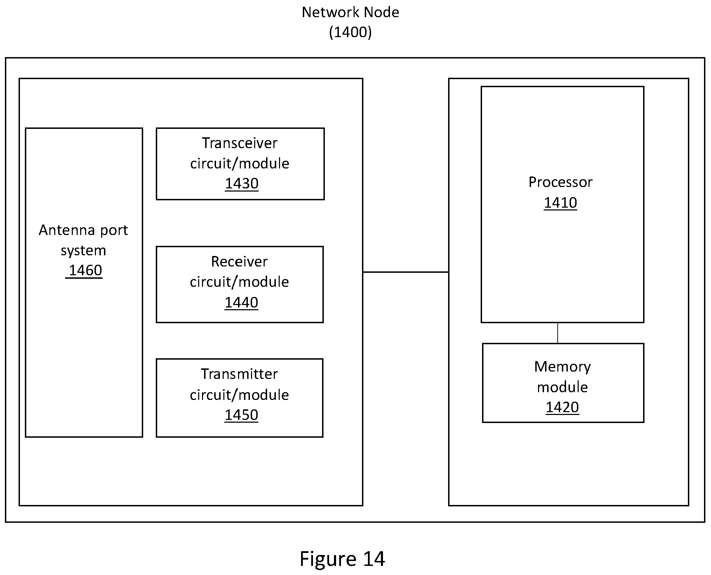

In order to perform the previously described process or method steps performed by the network node, there is also provided a network. **Figure 14** illustrates a block diagram depicting a network node. The network node 1400 comprises a processor 1410 or processing circuit or a processing module or a processor or means 1410; a receiver circuit or receiver module 1440; a transmitter circuit or transmitter module 1450; a memory module 1320 a transceiver circuit or transceiver module 1330 which may include the transmitter circuit 1450 and the receiver circuit 1440. The network node 1400 further comprises an antenna system 1460 which includes antenna circuitry for transmitting and receiving signals to/from at least the UE. The antenna system employ beamforming as previously described. The actions performed by the network node have already been described. The network node may also be viewed as a TRP.

The processing module/circuit 1410 includes a processor, microprocessor, an application specific integrated circuit (ASIC), field programmable gate array (FPGA), or the like, and may be referred to as the "processor." The processor 1410 controls the operation of the network node and its components. Memory (circuit or module) 1420 includes a random access memory (RAM), a read only memory (ROM), and/or another type of memory to store data and instructions that may be used by processor 1410. In general, it will be understood that the network node in one or more embodiments includes fixed or programmed circuitry that is configured to carry out the operations in any of the embodiments disclosed herein.

In at least one such example, the processor 1410 includes a microprocessor, microcontroller, DSP, ASIC, FPGA, or other processing circuitry that is configured to execute computer program instructions from a computer program stored in a non-transitory computer-readable medium that is in or is accessible to the processing circuitry. Here, "non-transitory" does not necessarily mean permanent or unchanging storage, and may include storage in working or volatile memory, but the term does connote storage of at least some persistence. The execution of the program instructions specially adapts or configures the processing circuitry to carry out the operations disclosed in this disclosure. Further, it will be appreciated that the network node may comprise additional components.

The network node 1400 may belong to any radio access technology including 4G or LTE, LTE-A, 5G, advanced 5G or a combination thereof that support beamforming technology. The network node comprising the processor and the memory contains instructions executable by the processor, whereby the network node 1400 is operative to perform any one of the subject-disclosed in this disclosure including the method according to claim 21 and the above method steps disclosed in relation to the actions performed by the network node.

Reference throughout this specification to "an example "or "exemplary" means that a particular feature, structure, or characteristic described in connection with the example is included in at least one embodiment of the present technology. Thus, appearances of the phrases "in an example" or the word "exemplary" in various places throughout this specification are not necessarily all referring to the same embodiment.

Throughout this disclosure, the word "comprise" or "comprising" has been used in a nonlimiting sense, i.e. meaning "consist at least of". Although specific terms may be employed herein, they are used in a generic and descriptive sense only and not for purposes of limitation. The embodiments herein may be applied in any wireless systems including LTE or 4G, LTE-A (or LTE-Advanced), 5G,, advanced 5G, WiMAX, WiFi, satellite communications, TV broadcasting etc.

**REFERENCES**

[1] 3GPP TS 38.211 V16.0.0: "3GPP; TSG RAN; NR; Physical channels and modulation (Rel. 16).", Jan. 2020.
[2] 3GPP TS 38.212 V16.0.0: "3GPP; TSG RAN; NR; Multiplexing and channel coding (Rel. 16).", Jan. 2020.
[3] 3GPP TS 38.213 V16.0.0: "3GPP; TSG RAN; NR; Physical layer procedures for control (Rel. 16).", Jan. 2020.
[4] 3GPP TS 38.214 V16.0.0: "3GPP; TSG RAN; NR; Physical layer procedures for data (Rel. 16).", Jan. 2020.
[5] 3GPP TS 38.321 V15.8.0: "3GPP; TSG RAN; NR; Medium Access Control (MAC) protocol specification (Rel. 15).", Jan. 2020.
[6] 3GPP TS 38.331 V15.8.0: "3GPP; TSG RAN; NR; Radio Resource Control (RRC); Protocol specification (Rel. 15).", Jan. 2020.
[7] 3GPP TS 38.101-1 V16.2.0: "3GPP; TSG RAN; User Equipment (UE) radio transmission and reception; Part 1: Range 1 Standalone (Rel. 16).", Jan. 2020.
[8] 3GPP TS 38.101-2 V16.2.0: "3GPP; TSG RAN; User Equipment (UE) radio transmission and reception; Part 2: Range 2 Standalone (Rel. 16).", Jan. 2020.

**Claims**

1. A method performed by a User Equipment, UE; the method comprising:

   - receiving (901), from a network node, a higher layer configuration that associates a sounding reference signal, SRS, resource or an SRS resource set comprising at least one SRS resource, with a control resource set pool index, wherein the control resource set pool index is a higher-layer parameter in a configuration of a control resource set, CORESET; wherein the CORESET comprises resources on which a physical downlink control channel, PDCCH, is transmitted from the network node, and
   - deriving (902) a spatial relation or a reference signal, RS, as pathloss reference for said SRS resource or for said at least one SRS resource of the SRS resource set with reference to at least one reference signal, RS, from quasi-colocation, QCL, information of a CORESET associated with said control resource set pool index; wherein the QCL information comprises a relationship between one or more reference signals and demodulation reference signal, DMRS, port(s) of the PDCCH, transmitted on the CORESET and the relationship indicates channel parameter(s) or reception type parameter(s) that are obtained from the reference signals.

2. The method according to claim 1 comprising, transmitting, to the network node, a SRS according to the spatial relation with a reference to a RS associated with the QCL information of the CORESET having the lowest identification number, ID, among the CORESETs associated with said control resource set pool index.

3. The method according to claim 1 comprising, transmitting, to the network node, a SRS with a transmit power that is derived from a pathloss estimate with a reference to a RS associated with the QCL information of the CORESET having the lowest identification number, ID among the CORESTs associated with said control resource set pool index.

4. The method according to anyone of claims 1-3 wherein the higher layer configuration is an information element, IE, comprising a list of at least one SRS resource or at least one SRS resource set and further comprising said control resource set pool index.

5. The method according to anyone of claims 1-4 comprising transmitting, to the network node, a SRS using the derived spatial relation and/or pathloss reference RS when more than one value is configured for the control resource set pool index.

6. The method according to anyone of the preceding claims comprising, receiving, from the network node, a higher layer configuration comprising a list of values of a parameter used in an SRS configuration to indicate that the UE transmits a SRS configured with the indicated parameter using the spatial relation and/or the pathloss reference RS.

7. A method performed by a UE, the method comprising:

- receiving (1001) a Medium Access Control-Control Element, MAC-CE, message from a network node, that associates at least an SRS resource or at least an SRS resource set with a control resource set pool index, wherein the control resource set pool index is a higher-layer parameter in a configuration of a control resource set, CORESET, wherein the CORESET comprises resources on which a physical downlink control channel, PDCCH, is transmitted from the network node and
- deriving (1002) a spatial relation or a reference signal, RS, as pathloss reference for said SRS resource or for said at least one SRS resource of the SRS resource set with reference to at least one reference signal, RS, from quasi-colocation, QCL, information of a CORESET associated with said control resource set pool index; wherein the QCL information comprises a relationship between one or more reference signals and demodulation reference signal, DMRS, port(s) of the PDCCH, transmitted on the CORESET and the relationship indicates channel parameter(s) or reception type parameter(s) that are obtained from the reference signals.

8. The method according to claim 7 comprising, receiving, from the network node, a MAC-CE message comprising at least a serving cell ID, an SRS resource ID or an SRS resource set ID and the control resource set pool index.

9. The method according to claim 7 comprising, receiving, from the network node, a MAC-CE message for the activation of a semi-persistent SRS with the control resource set pool index.

10. The method according to claim 7 comprising, receiving, from the network node, a MAC-CE message for the update of pathloss reference RS for SRS with the control resource set pool index.

11. The method according to any one of claims 7-10 comprising, transmitting, to the network node, said SRS according to the spatial relation with a reference to a RS associated with the QCL information of the CORESET having the lowest identification number, ID among the CORESETs associated with said control resource set pool index.

12. The method according to any one of claims 7-11 comprising, transmitting, to the network node, said SRS with a transmit power derived using the pathloss estimate with a reference to a RS associated with the QCL information of the CORESET having the lowest identification number, ID among the CORESETs associated with said control resource set pool index.

13. The method according to any one of claims 7-11 comprising receiving, from the network node, a higher layer parameter indicating whether the MAC-CE message contains a field that indicates a control resource set pool index or a field that maps to the control resource set pool index.

14. A method performed by a user equipment, UE, (1300), the method comprising:

- receiving (1101) a PDCCH from a network node (1400) that schedules one or more PDSCH(s); and
- deriving (1102) a spatial relation or a reference signal, RS, as pathloss reference for an SRS resource or for at least one SRS resource of the SRS resource set triggered via the PDCCH, with reference to at least one reference signal, RS, from quasi-colocation, QCL, information provided in a transmission configuration indication state, TCI-state, of one of the PDSCH(s) scheduled by the PDCCH; wherein the QCL information of a PDSCH comprises a relationship between one or more reference signals and demodulation reference signal, DMRS, port(s) of the PDSCH and the relationship indicates channel parameter(s) or reception type parameter(s) that are obtained from the reference signals; and wherein the TCI-state is a higher layer configured parameter that comprises the QCL information.

15. The method according to claim 14 comprising, transmitting, to the network node, said SRS according to the spatial relation with a reference to a RS associated with the QCL information provided in the TCI-state with the lowest ID indicated in the PDCCH scheduling the PDSCH(s).

16. The method according to claim 14 or claim 15 comprising, transmitting, to the network node, said SRS with a transmit power derived using a pathloss estimate with a reference to a RS associated with the QCL information provided in the TCI-state with the lowest ID indicated in the PDCCH scheduling the PDSCH(s).

17. The method according to claim 14, comprising, receiving, from the network node, a higher layer parameter that indicates the TCI-state to be chosen from the ones indicated for the PDSCH(s) scheduled by the PDCCH to derive the spatial relation and/or pathloss reference RS for the SRS.

18. A method performed by a User Equipment, UE, (1300) the method comprising:

- receiving a PDCCH from a network node (1400);), and
- deriving a spatial relation or a reference signal, RS, as pathloss reference for an SRS resource or for at least one SRS resource of the SRS resource set triggered via the PDCCH, with reference to at least one reference signal, RS, from quasi-colocation, QCL, information of a CORESET on which the PDCCH is transmitted; wherein the QCL information comprises a relationship between one or more reference signals and demodulation reference signal, DMRS, port(s) of the PDCCH, transmitted on the CORESET and the relationship indicates channel parameter(s) or reception type parameter(s) that are obtained from the reference signals.

19. The method according to claim 18 comprising receiving a higher layer parameter indicating whether to derive the spatial relation or pathloss reference RS for said SRS resource or SRS resource set from the QCL information of said CORESET.

20. A user equipment, UE, (1300) comprising a processor (1310) and a memory (1320) containing instructions executable by the processor (1310), whereby said UE (1300) is operative to perform any one of the subject matters of claims 1-19.

21. A method performed by a network node (1400), the method comprising:

- transmitting (1201), to a user equipment, UE (1300), a higher layer configuration or indication that associates a sounding reference signal, SRS, resource or an SRS resource set comprising at least one SRS resource, with a control resource set pool index, wherein the control resource set pool index is a higher-layer parameter in a configuration of a control resource set, CORESET; wherein the CORESET comprises resources on which a physical downlink control channel, PDCCH, is transmitted from the network node, for enabling the UE to derive a spatial relation or a reference signal, RS, as pathloss reference for said SRS resource or for said at least one SRS resource of the SRS resource set with reference to at least one reference signal, RS, from quasi-colocation, QCL, information of a CORESET associated with said control resource set pool index; wherein the QCL information comprises a relationship between one or more reference signals and demodulation reference signal, DMRS, port(s) of the PDCCH, transmitted on the CORESET and the relationship indicates channel parameter(s) or reception type parameter(s) that are obtained from the reference signals; and
- receiving (1202), from the UE, a SRS according to the spatial relation or a SRS with a transmit power derived using the pathloss estimate, with a reference to a RS associated with the QCL information of a CORESET associated with said control resource set pool index.

22. A network node (1400) comprising a processor (1410) and a memory (1420) containing instructions executable by the processor (1410), whereby said network node (1400) is operative to perform the subject-matter of claim 21.

EP 3 855 669 A1

```
TCI-State ::=                   SEQUENCE {
    tci-StateId                     TCI-StateId,
    qcl-Type1                       QCL-Info,
    qcl-Type2                       QCL-Info                      OPTIONAL,    -- Need R
    ...
}


QCL-Info ::=                    SEQUENCE {
    cell                            ServCellIndex                 OPTIONAL,    -- Need R
    bwp-Id                          BWP-Id              OPTIONAL, -- Cond CSI-RS-Indicated
    referenceSignal                 CHOICE {
        csi-rs                          NZP-CSI-RS-ResourceId,
        ssb                             SSB-Index
    },
    qcl-Type                        ENUMERATED {typeA, typeB, typeC, typeD},
    ...
}
```

**Figure 1**: RRC configuration of the TCI-State Information Element (SoTA [6])

```
SRS-ResourceSet ::=                            SEQUENCE {
    srs-ResourceSetId              SRS-ResourceSetId,
    srs-ResourceIdList            SEQUENCE (SIZE(1..maxNrofSRS-ResourcesPerSet)) OF
                                   SRS-ResourceId     OPTIONAL,     -- Cond Setup


    …
    ---<All other parameters of 'SRS-ResourceSet' not shown>---
    …

    usage                         ENUMERATED {beamManagement,
                                       codebook, nonCodebook, antennaSwitching},
    alpha                         Alpha                     OPTIONAL, -- Need S
    p0                                                      INTEGER (-202..24)
                                                            OPTIONAL, -- Cond Setup
    pathlossReferenceRS           CHOICE {
        ssb-Index                 SSB-Index,
        csi-RS-Index              NZP-CSI-RS-ResourceId
    }                                                       OPTIONAL, -- Need M
    srs-PowerControlAdjustmentStates         ENUMERATED { sameAsFci2,
                                   separateClosedLoop} OPTIONAL, -- Need S
    ...
}
```

**Figure 2**: SRS resource set configuration (SoTA) [6])

```
SRS-Resource ::=                           SEQUENCE {
    srs-ResourceId              SRS-ResourceId,
    nrofSRS-Ports               ENUMERATED {port1,ports2,ports4},

    ...
    ---<All other parameters of 'SRS-ResourceSet' not shown>---
    ...

    spatialRelationInfo         SRS-SpatialRelationInfo    OPTIONAL,    -- Need R
    ...
}

SRS-SpatialRelationInfo ::=      SEQUENCE {
    servingCellId                        ServCellIndex   OPTIONAL,    -- Need S
    referenceSignal                      CHOICE {
        ssb-Index                            SSB-Index,
        csi-RS-Index                         NZP-CSI-RS-ResourceId,
        srs                                  SEQUENCE {
            resourceId                           SRS-ResourceId,
            uplinkBWP                            BWP-Id
        }
    }
}
```

**Figure 3**: SRS resource configuration (SoTA [6])

EP 3 855 669 A1

**Figure 4
(SoTA)**

gNB

UE

**401**. The gNB identifies the spatial filter $b_{i,\text{gNB}}$ (beam direction) to be used for the transmission of PDCCHs after a beam sweep procedure

**406**. After beam sweeping, the UE determines that the best spatial filter to receive the gNB beam transmitted with spatial filter $b_{i,\text{gNB}}$ is $b_{i,\text{UE}}$

**402**. The selected beam direction ($b_{i,\text{gNB}}$) is indicated for a CORESET $c_i$ via a TCI-state in a MAC-CE message

**407**. TCI state as indicated in MAC-CE message is applied to CORESET $c_i$, i.e., the spatial filter $b_{i,\text{UE}}$ is selected for the reception of PDCCH(s) on CORESET $c_i$

**403**. PDCCH(s) on CORESET $c_i$ are transmitted using the spatial filter $b_{i,\text{gNB}}$

**408**. Spatial filter $b_{i,\text{UE}}$ is used by the UE for the reception of the PDCCH(s) on CORESET

**404**. For the UL transmissions, the gNB requires the UE to use the same beam direction/spatial filter as for the reception of the PDCCH(s)

**405**. Beam direction $b_{i,\text{gNB}}$ is indicated for the UL transmission of SRS resource $s_i$, i.e., spatial relation and pathloss reference RS $b_{i,\text{gNB}}$ are set via the SRS resource and the corresponding SRS resource set configurations respectively

**409**. UE applies the configured spatial relation and pathloss reference RS to the SRS resource $s_i$

**410**. SRS resource $s_i$ transmitted using the spatial filter $b_{i,\text{UE}}$ with a Tx power derived from the corresponding pathloss reference RS

**Figure 5 (SoTA)**

gNB | UE

**501.** The gNB identifies the spatial filter $b_{i,\text{gNB}}$ (beam direction) to be used for the transmission of PDCCHs after a beam sweep procedure

**502.** The selected beam direction ($b_{i,\text{gNB}}$) is indicated for a CORESET $c_i$ via a TCI-state in a MAC-CE message

**503.** PDCCH(s) on CORESET $c_0$ (the CORESET with the lowest ID) are transmitted using the spatial filter $b_{i,\text{gNB}}$

**504.** For the UL transmissions, the gNB requires the UE to use the same beam direction/spatial filter as for the reception of the PDCCH(s) on CORESET $c_0$

**505.** Beam direction $b_{i,\text{gNB}}$ is to be used for the UL transmission of SRS resource $s_i$. The gNB DOES NOT configure spatial relation for the SRS resource and pathloss reference RS for the corresponding SRS resource set

**506.** After beam sweeping, the UE determines that the best spatial filter to receive the gNB beam transmitted with spatial filter $b_{i,\text{gNB}}$ is $b_{i,\text{UE}}$

**507.** TCI state as indicated in MAC-CE message is applied to CORESET $c_i$, i.e., the spatial filter $b_{i,\text{UE}}$ is selected for the reception of PDCCH(s) on CORESET $c_i$

**508.** Spatial filter $b_{i,\text{UE}}$ is used by the UE for the reception of the PDCCH(s) on CORESET $c_0$

**509.** UE applies the default spatial relation and pathloss reference RS to the SRS resource $s_i$, i.e., it uses the TCI-state of CORESET $c_0$ to determine the spatial relation and PL reference RS

**510.** SRS resource $s_i$ transmitted using the spatial filter $b_{i,\text{UE}}$ with a Tx power derived from the corresponding pathloss reference RS

```
SRS-Resource ::=                          SEQUENCE {
    srs-ResourceId              SRS-ResourceId,
    nrofSRS-Ports               ENUMERATED {port1,ports2,ports4},
    defaultAssumptionID         CORESETpoolIndex,           OPTIONAL,    -- Need R
    ...

    ---<All other parameters of 'SRS-ResourceSet' not shown>---
    ...


    spatialRelationInfo         SRS-SpatialRelationInfo   OPTIONAL,    -- Need R
    . . .
}
```

**Figure 6**: Configuration of an SRS resource comprising the higher layer parameter *CORESETpoolIndex*

EP 3 855 669 A1

```
SRSdefaultAssumptionGrouping::=                                SEQUENCE {
    defaultAssumptionID                 CORESETpoolIndex,
    srs-DefAssumptionResourceList       SEQUENCE (SIZE(1..maxNrofSRS-Resources)) OF SRS-ResourceId
}
```

**Figure 7**: SRS resource list and association with a *CORESETpoolIndex*.

EP 3 855 669 A1

```
SRSdefaultAssumptionGrouping::=                                SEQUENCE {
    defaultAssumptionID                 CORESETpoolIndex,
    srs-DefAssumptionResourceSetList    SEQUENCE (SIZE(1..maxNrofSRS-ResourceSets)) OF SRS-ResourceSetId
}
```

**Figure 8**: SRS resource set list and association with a *CORESETpoolIndex*.

| 901 | Receiving a higher layer configuration that associates a SRS, resource or an SRS resource set comprising at least one SRS resource, with a *CORESETpoolIndex* which is a higher-layer parameter in a CORESET comprising resources on which a PDCCH is transmitted |

| 902 | Deriving a spatial relation or a RS as pathloss reference for said SRS resource or for said at least one SRS resource of the SRS resource set with reference to at least RS, from QCL information of a CORESET; wherein the QCL information comprises a relationship between one or more reference signals and DMRS port(s) of the PDCCH transmitted on the CORESET and the relationship indicates channel parameter(s) or reception type parameter(s) that are obtained from the reference signals |

Figure 9

```
┌─────────────────────────────────────────────────────────────┐
│  Receiving a MAC-CE that associates at least an SRS resource or │
│  at least an SRS resource set with a CORESETpoolIndex which is a │
│  higher-layer parameter in a CORESET comprising resources on which a │
│  PDCCH is transmitted                                          │
└─────────────────────────────────────────────────────────────┘
```

1001

```
┌─────────────────────────────────────────────────────────────┐
│  Deriving a spatial relation or a RS as pathloss reference for said │
│  SRS resource or for said at least one SRS resource of the SRS │
│  resource set with reference to at least one RS, from QCL       │
│  information of the CORESET; wherein the QCL information         │
│  comprises a relationship between one or more RSs and  DMRS     │
│  port(s) of the PDCCH, transmitted on the CORESET and the       │
│  relationship indicates channel parameter(s) or reception type  │
│  parameter(s) that are obtained from the reference signals      │
└─────────────────────────────────────────────────────────────┘
```

1002

Figure 10

| 1101 — | Receiving a PDCCH from a network node |
|---|---|

1102 —

Deriving a spatial relation or a RS as pathloss reference for an SRS resource or for at least one SRS resource of the SRS resource set triggered via the PDCCH that schedules one or more PDSCH(s), with reference to at least one reference signal, RS, from QCL information provided in a TCI-state, of one of the PDSCH(s) scheduled by the PDCCH; wherein the QCL information comprises a relationship between one or more RSs and DMRS port(s) of the PDSCH and the relationship indicates channel parameter(s) or reception type parameter(s) that are obtained from the RSs; and wherein the TCI-state is a higher layer configured parameter that comprises the QCL information

Figure 11

1201 — Transmitting, to a UE, a higher layer configuration that associates a SRS, resource or an SRS resource set comprising at least one SRS resource, with a *CORESETpoolIndex* which is a higher-layer parameter in a CORESET comprising resources on which a PDCCH is transmitted

1202 — Receiving, from the UE, a SRS according to the spatial relation with a reference to a RS associated with QCL information of the CORESET which is associated with said *CORESETpoolIndex*

Figure 12

User Equipment
UE (1300)

Antenna port
system
1360

Transceiver
circuit/module
1330

Receiver
circuit/module
1340

Transmitter
circuit/module
1350

Processor
1310

Memory
module
1320

Figure 13

Network Node
(1400)

Processor 1410

Memory module 1420

Transceiver circuit/module 1430

Receiver circuit/module 1440

Transmitter circuit/module 1450

Antenna port system 1460

Figure 14

Europäisches
Patentamt

European
Patent Office

Office européen
des brevets

# EUROPEAN SEARCH REPORT

Application Number

EP 20 15 3938

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FRAUNHOFER IIS ET AL: "Enhancements on UE multi-beam operation", 3GPP DRAFT; R1-1910432_UE-MULTIBEAM_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Chongqing, China; 20190814 - 20190820 4 October 2019 (2019-10-04), XP051808194, Retrieved from the Internet: URL:https://ftp.3gpp.org/tsg_ran/WG1_RL1/T SGR1_98b/Docs/R1-1910432.zip R1-1910432_UE-MultiBeam_final.docx [retrieved on 2019-10-04] * page 2 * * page 4 * ----- | 1-3,5-7, 11-17, 20-22 | INV. H04L5/00 H04B7/06 H04B7/08 |
| X | US 2019/313386 A1 (HWANG DAESUNG [KR] ET AL) 10 October 2019 (2019-10-10) * paragraph [0210] * ----- | 18,19 | TECHNICAL FIELDS SEARCHED (IPC) H04L H04B |

The present search report has been drawn up for all claims

| Place of search | Date of completion of the search | Examiner |
|---|---|---|
| The Hague | 3 July 2020 | Gimmler-Dumont, C |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 15 3938

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2020

| Patent document cited in search report | Publication date | Patent family member(s) | Publication date |
|---|---|---|---|
| US 2019313386 A1 | 10-10-2019 | AU 2019248266 A1 | 16-04-2020 |
| | | CA 3070553 A1 | 10-10-2019 |
| | | CN 110574331 A | 13-12-2019 |
| | | EP 3576336 A1 | 04-12-2019 |
| | | JP 2020516101 A | 28-05-2020 |
| | | KR 20190117470 A | 16-10-2019 |
| | | KR 20200032252 A | 25-03-2020 |
| | | SG 11201912493Q A | 30-01-2020 |
| | | US 2019313386 A1 | 10-10-2019 |
| | | US 2020092869 A1 | 19-03-2020 |
| | | US 2020187181 A1 | 11-06-2020 |
| | | WO 2019194643 A1 | 10-10-2019 |

EPO FORM P0459

For more details about this annex : see Official Journal of the European Patent Office, No. 12/82

**REFERENCES CITED IN THE DESCRIPTION**

**Non-patent literature cited in the description**

- 3GPP; TSG RAN; NR; Physical channels and modulation (Rel. 16). *3GPP TS 38.211 V16.0.0,* January 2020
- 3GPP; TSG RAN; NR; Multiplexing and channel coding (Rel. 16). *3GPP TS 38.212 V16.0.0,* January 2020
- 3GPP; TSG RAN; NR; Physical layer procedures for control (Rel. 16). *3GPP TS 38.213 V16.0.0,* January 2020
- 3GPP; TSG RAN; NR; Physical layer procedures for data (Rel. 16). *3GPP TS 38.214 V16.0.0,* January 2020
- 3GPP; TSG RAN; NR; Medium Access Control (MAC) protocol specification (Rel. 15). *3GPP TS 38.321 V15.8.0,* January 2020
- 3GPP; TSG RAN; NR; Radio Resource Control (RRC); Protocol specification (Rel. 15). *3GPP TS 38.331 V15.8.0,* January 2020
- 3GPP; TSG RAN; User Equipment (UE) radio transmission and reception; Part 1: Range 1 Standalone (Rel. 16). *3GPP TS 38.101-1 V16.2.0,* January 2020
- 3GPP; TSG RAN; User Equipment (UE) radio transmission and reception; Part 2: Range 2 Standalone (Rel. 16). *3GPP TS 38.101-2 V16.2.0,* January 2020